# EUROPEAN PATENT SPECIFICATION

(11) **EP 4 561 405 B1**
(45) Date of publication and mention of the grant of the patent: **08.04.2026**
(21) Application number: 23745593.6
(22) Date of filing: 31.07.2023
(51) Int. Cl.: A47J 31/44, A47J 31/36, A47J 31/52, B65D 85/804

(54) **BEVERAGE AND/OR FOODSTUFF PREPARATION SYSTEM AND MACHINE FOR PREPARING A BEVERAGE AND/OR FOODSTUFF**
GETRÄNKE- ODER LEBENSMITTELZUBEREITUNGSSYSTEM UND GETRÄNKE- UND/ODER LEBENSMITTELZUBEREITUNGSMASCHINE
SYSTÈME DE PRÉPARATION DE BOISSON OU D'ALIMENT ET MACHINE DE PRÉPARATION DE BOISSON ET/OU D'ALIMENT

(30) Priority: 29.07.2022 EP 22187694
(43) Date of publication of application: 04.06.2025
(73) Proprietor: Société des Produits Nestlé S.A., 1800 Vevey (CH)
(72) Inventor: NOTH, André, 1009 Pully (CH); VUAGNIAUX, Didier, 1188 Gimel (CH); KOLLEP, Alexandre, 1095 Lutry (CH); PAILLARD, Olivier, 25370 Metabief (FR)
(74) Representative: Pasquino, Fabio
(86) International application number: PCT/EP2023/071113
(87) International publication number: WO 2024/023355

(56) References cited:
- EP-A1- 2 515 725
- WO-A1-2014/029803
- WO-A2-2023/021475
- US-A1- 2013 206 011
- US-A1- 2016 309 951
- US-B2- 11 254 491

## Description

### TECHNICAL FIELD

The present disclosure relates generally to electrically operated beverage or foodstuff preparation systems, with which a beverage or foodstuff is prepared from a pre-portioned capsule.

### BACKGROUND

Systems for the preparation of a beverage comprise a beverage preparation machine and a capsule. The capsule comprises a single-serving of a beverage forming precursor material, e.g. ground coffee or tea. The beverage preparation machine is arranged to execute a beverage preparation process on the capsule, typically by the exposure of pressurized, heated water to said precursor material. Processing of the capsule in this manner causes the at least partial extraction of the precursor material from the capsule as the beverage.

This configuration of beverage preparation machine has increased popularity due to 1) enhanced user convenience compared to a conventional beverage preparation machines (e.g. compared to a manually operated stove-top espresso maker) and 2) an enhanced beverage preparation process, wherein: preparation information encoded by a code on the capsule is read by the machine to define a recipe, and; the recipe is used by the machine to optimise the preparation process in a manner specific to the capsule. In particular, the encoded preparation information may comprise operating parameters selected in the beverage preparation process, including: fluid temperature; fluid pressure; preparation duration, and; fluid volume.

EP 2594171 A1 discloses a machine that reads a code from an underside of a flange of a capsule. A drawback is that the code cannot be applied to parts of the capsule that are more flexible, e.g. the membrane, since the code can only be read from a rigid support. Moreover, for the same reason, the code cannot be applied to alternative capsules where a body of the capsule is made from different materials which are more flexible, e.g. recyclable materials, including paper or wood pulp.

US2016309951 A1 discloses a consumable recognition system for recognizing placement and/or type of consumable containing a food substance for the preparation of a beverage by use of a beverage dispenser. To enable the recognition of placement and/or type of consumable, the system comprises a light sensor for sensing light reflected from a reflection element of the consumable during a relative movement between the consumable and the light sensor to obtain a sensor signal. The sensor signal is influenced by the position, reflectivity, and/or pattern of the reflection element, as well as by a movable sensor carrier that holds the light sensor. The accuracy of the reading can therefore be affected when containers are flexible, stretchable, or have wrinkles that alter the reflection pattern of the light.

WO2023021475 A2 discloses an optically recognizable capsule for preparing a beverage in an automatic beverage preparation machine comprising a dispensing cup and a brewing fluid injection device relatively movable between a capsule loading configuration and a brewing configuration. The capsule comprises a cup-shaped body, containing the food substance and closed by a lid designed to be perforated to allow the brewing fluid to be supplied into the capsule. The capsule further comprises an optical recognition membrane, which is distinct from and is arranged at an inner face of, the lid, carrying an optical recognition substance. The reading of the optical recognition membrane can only occur when the inner portion of the membrane is moved away from the lid by a perforation device carried by the brewing fluid injection device during a relative movement of the dispensing cup and the brewing fluid injection device, therefore increasing the risk of damages to both the lid and the membrane.

Therefore, in spite of the effort already invested in the development of said systems further improvements are desirable.

### SUMMARY

The present invention provides a system comprising a container and a machine for preparing a beverage and/or foodstuffs according to claim 1.

The container includes a body portion that has a storage portion for containing a precursor material and a closing member to close the storage portion, and; a machine-readable code storing preparation information. As used herein reference to a "code" may include one or more repetitions of the code. In embodiments, the code is arranged on a central region of the closing member. The storage portion includes a cavity that extends in a depth direction from the closing member. The container may have a maximum depth that is less than its diameter, which can be measured at the opening of the storage portion. In embodiments the code is an optically readable code.

In embodiments, the body portion includes a flange portion that connects the storage portion to the closing member. The cavity of the storage portion extends in a depth direction from the flange portion. The flange portion presents a generally planar peripheral rim for receiving the closing member. In embodiments, the flange portion is plaar. As used herein the term "planar" in respect of the flange portion may refer to the flange portion arranged to extend entirely with the lateral and longitudinal directions, or substantially with said directions (e.g. with major components in these directions as opposed to a depth direction).

The machine includes a code reading system with a code reader to read the code of the container; a processing unit for processing the precursor material of the container, and; electrical circuitry to control the processing unit based on the preparation information read from the code. As used herein the term "based on" in respect of the preparation information may refer to a direct relationship (e.g. a value of a parameter of a recipe is encoded directly on the code) or a rule is used via a stored relationship to look up one or more of said values using the preparation information as an identifier. The code reader may include an image capturing unit (e.g. a camera) a lens and an outermost aperture (e.g. a reading window). An outermost portion of the code reader may be referred to as a reading head.

According to the present invention, the machine includes a positioning mechanism which is configured to position the container in a holding position or a reading position in which the code can be read by the code reading system.

According to the present invention, the positioning mechanism is adapted to deform the body portion of the container from an undeformed configuration to a deformed configuration, in which the code is readable by the code reader. In the undeformed position the code may not be readable, including reliably readable, by the code reader, e.g. due to wrinkling or other non-uniform shaping of the closing member.

According to the present invention, the positioning mechanism adapted to deform the body portion in the deformed configuration to effect subsequent deformation of the closing member so that it presents a comparatively more uniform surface for reading the code. The deformation of the body portion may be by applying 3-point bending and/or a bending moment in a lateral direction to the body of the container. The deformation may be applied directly to the body portion and indirectly to the closing member, such that the positioning mechanism does not directly contact the closing member (which may exclude a portion of the closing member that overlaps the flange portion).

By implementing the position mechanism to deform the body portion to effect a specific deformation of the closing member to improve reading, the closing member may be manipulated without the positioning mechanism directly applying load to deform the closing member directly thereto. Such an implementation may be advantageous since damage to the closing member due to direct contact with the positioning mechanism may be avoided. Such an implementation may enable a range of materials to be implemented for the storage portion, e.g. materials that are flexible including paper or wood pulp compared to a comparatively rigid material such as aluminium.

As used herein the term "uniform" refers to a comparatively more even spatial arrangement to the undeformed configuration, e.g., more planar and absent of, which may include the absence or reduction of folds, creases or other spatial discontinuities that would otherwise interfere with reading of the code.

In embodiments, in the deformed configuration the closing member is increased in tension compared to the undeformed configuration.

By implementing the positioning mechanism to deform the body portion of the container to increase tension (e.g. an in plane membrane tension as opposed to a through thickness tension) of the closing member, the code of the closing member may be more accurately read, since the closing member is presented more uniformly for reading.

As used herein the term "deform" in respect of the body portion may refer to deformation of the storage portion and/or flange portion that is elastic or plastic including fully or partially reversible. As used herein the term "holding position" may refer to a position in which the container is held prior to being subject to loading, e.g. to cause its displacement and/or deformation into a reading position. In suitable embodiments, the container in the holding position is arranged in an undeformed configuration. In the holding position the code may not be readable by the code reader, e.g. the code may be positioned too far away from or otherwise unreadable by a code reader of the code reading system, e.g. due to winking of the code.

As used herein the term "reading position" refers to a position in which load is applied to one or more portions of the container to deform the container to improve readability of the code on the container. According to the present invention, the container in the reading position is arranged in a deformed configuration. The reading position may be defined by a range of positions in which a loading criterion has been exceeded or a single condition in which a load condition is achieved. The reading position is defined as a position in which the code reader (e.g. a reading head thereof) is in contact, including pressed into, the code and is readable to extract the preparation information from the code.

In embodiments, in the deformed configuration, the flange portion is deformed to implement a change in curvature (e.g. in overall global curvature, rather that local curvature due to creases etc) along a lateral direction compared to the undeformed configuration. The curvature may be defined as the deviation from a straight line in the lateral direction (e.g. which the flange position generally assumes in the undeformed configuration) that bridges left and right sides of the container, when viewed from a plane defined by the longitudinal and depth directions.

By implementing the positioning mechanism to change curvature (e.g. to increase the curvature) across the flange portion, the path that the closing member extends may be increased or otherwise adjusted to conveniently provide tensioning for improved readability. A degree of curvature can be defined by a magnitude of the first order spatial derivative of the depth and lateral direction.

In embodiments, in the deformed configuration the central region of the closing member experiences less curvature than a peripheral region (e.g. at the left and right sides) of the closing member.

Less curvature (e.g. a turning point in the derivative of the depth and lateral direction) at the central region on the closing member where the code is read may improve readability.

In embodiments, the code is arranged on a central region of the closing member, and in the deformed configuration the central region of the closing member is displaced in the counter depth direction (e.g. relative the flange portion or its spatial position prior to deformation).

By implementing the central region of the closing member that comprises the code to be displaced forward, i.e. in the counter depth direction, a generally planar central region may be achieved, which is more reliable to read than when in the undeformed position.

As used herein the term "central region" refers to a region of the closing member that includes at least the geometric centre. The central region may include a region adjacent to the centre e.g. with a radii of less than 10% or 20% or 30%. It may also include just the geometric centre, i.e. a point. The central region may refer to a region of the closing member that is separate, e.g. distal, from a peripheral region.

As used herein the term "peripheral region" refers to a region of the closing member that includes the edges. The peripheral region may include a region adjacent to the periphery e.g. with a radii of greater than 90% or 80% or 70%. It may also include just the periphery, i.e. a peripheral edge.

The peripheral region may refer to a region of the closing member that is separate, e.g. distal, from the central region.

In embodiments, in the deformed configuration the closing member is arranged to physically contact the code reader (e.g. a reading head thereof). By arranging the code reader to press into the closing member, it may be ensured that the contacted portion of the closing member is aligned with and at a precise distance to the code reader, which may improve reading accuracy. It may also ensure that the central region is more uniform.

In embodiments, a reading head of the code reader is shaped to correspond in shape to a shape of the closing member (e.g. an outer face of the central region) with the container in the deformed configuration. For example, a head of the reader may be flat and/or curved to correspond in shape the closing member with the container in the deformed configuration. A flat or slightly curved head may provide easier reading of the code due to less distortion of the optics. By arranging the reading head to correspond to the closing member, the reading head may be pressed into the closing member or rest on it, which may ensure a more uniform closing member for reading.

In embodiments, the storage portion is hermitically sealed and the positioning mechanism is arranged to reduce an internal volume of the storage portion in the deformed configuration compared to the deformed configuration. By reducing an internal volume a pressure acting on the closing member may be increased, which may provide a more unform surface for reading.

In embodiments, in the deformed configuration the positioning mechanism is arranged to displace the precursor material into the closing member to effect displacement of the closing member when transitioning from the undeformed to the deformed configuration. By moving the precursor material into the closing member a pressure acting on the closing member through the precursor material may be increased, which may provide a more unform surface for reading. However, the force applied to the precursor material may be regulated below a threshold to prevent over compaction of the precursor material that could otherwise be unsatisfactory to process. It will be understood that sufficient precursor material is stored by the storage portion such that as the volume of the storage portion is decreased under deformation an increasing volumes of the precursor material can be pushed into the closing member.

In embodiments, as the container transitions from the undeformed configuration to the deformed configuration, the central region is displaced in the counter depth direction towards the code reader, which may be stationary with respect to the machine. By displacing the container such that the central region of the closing member advances towards the code reader, improved code reading may be achieved.

In embodiments, the positioning mechanism comprises a support to support the container at the flange portion and apply pressing force to a base of the storage portion of the container via a pressing element. It has been found that applying a compressive force in this manner enables suitable deformation of the container to improve reading of the code. The support may for example be integrated as a guide portion.

In embodiments, a shape of (at least part of) the support corresponds in shape to the container in the deformed configuration. By implementing the profile of an abutting portion of the support to have the same, including substantial the same, shape as the container when deformed, the support may suitably guide the container into the deformed portion and efficiently retain it in said position. In particular, if the container is plastically deformed, it may still pass conveniently through the support since at least part of the support is arranged to correspond to the deformed shape.

In embodiments, the machine includes a guide portion, which is arranged to guide the container inserted into the guide portion via gravity from an inserted position to the pre-reading holding position. In embodiments, a guide portion is arranged to guide the container from the holding position via gravity to the processing unit. A gravitationally fed system may be convenient to implement (e.g. the guide portion is vertically aligned or inclined to the vertical). In embodiments, the support is be integrated as a guide portion. In embodiments, the positioning mechanism is arranged to act on the container when in the guide portion, hence at least part of the positioning mechanism is arranged in the guide portion. In embodiments, the guide portion is arranged as an enclosed channel with an entrance for insertion of a container and an exit for transfer of the container to the processing unit with the positioning mechanism located therebetween.

In embodiments, a top engaging portion of the guide portion of the container support corresponds in shape to that of a top surface of the flange in the deformed configuration. In embodiments, a bottom engaging portion of the guide portion of the container support corresponds in shape to that of a bottom surface of the flange in the undeformed configuration. By implementing the guide portion to correspond in shape to the flange portion in both the deformed and undeformed configuration, the container may pass through the guide portion conveniently, with it being able to support both positions.

In embodiments, as the container transitions from the undeformed configuration to the deformed configuration, the whole container is translated in the counter depth direction towards the code reader of the code reading system. By enabling the container to be displaced as well as deformed, it may be more conveniently positioned for reading. Moreover, the container may be more conveniently inserted into the machine since less precision is required.

In embodiments, the code reading system is arranged to read the container before it is processed by the processing unit, and a container gravitationally transferred from the code reading system (e.g. the holding position) to the processing unit. By implement the container to be gravitationally fed from the code reading system to the processing unit, a cost effective loading system may be implemented. Moreover, by implementing the container to be deformed and/or pressed into the reading head the drawbacks of vapour from the container processing system obscuring the code from the code reader may be maximised.

According to the present invention, the positioning mechanism is arranged to translate (e.g. to move slideably) along an axis the container and code reader relative to each other from a holding position, in which the container is separated from a reading head of the code reader and the code is aligned along said axis with the code reader, to a reading position, in which the code of the container is in contact with the reading head.

As used herein the term "axis" or "code reading axis" may refer to an axis that the position mechanism translates the capsule along. The axis may be arranged normal to and through a reading direction of the reading head (which is the direction in which code reader obtains an image of the code).

As used herein the term "translate" in respect of the capsule may refer to the capsule being translated in a direction corresponding to the axis. It may include in additional to said translation a minor level of rotation, which for example could occur in the instance the container sits at an angle in the guide portion in the holding position as opposed to aligned to a face of the guide portion that opposes the code reader.

As used herein the term "aligned" in respect of the code and axis may refer to the axis projecting through one or more repetitions of the code such that only an axial distance along the axis (which is typically the depth distance) needs to be closed when transitioning from the holding position to the code reading position. As used herein the term "separated" in respect of the holding position may refer to a geometric distance, e.g. in the depth, direction between the code an code reader. By implementing the positioning mechanism to translate the container from an aligned out of contact position to an in contact position, a container may be conveniently loaded into the machine and may be accurately read. For example, by implementing an out of contact holding position, the container can be slid into alignment (e.g. via gravity) without interference from the code reader. A simple mechanism may thereafter be implemented to translate the container into contact with the code reader. Direct contact between the code reader and code may enable any debris from the processing unit (e.g. steam or precursor material) that is present on the code and would otherwise interfere with the code reading to be displaced. It may also ensure the code is more uniform when read. Moreover, by having a translating contact, the code reader may be set back from the entry to the processing unit, which may enable the code reader to be located away from debris from the processing unit which may exit via the entry.

According to the present invention, the positioning mechanism is configured with in the reading position the closing member to present a comparatively more uniform surface for reading of the code compared to the holding position.

In embodiments, the processing unit includes a container holding portion and a closing portion, which are movable between a container receiving position and a container processing position in a depth direction. The direction of said movement maybe perpendicular (including substantially perpendicular) to the direction of transmission of the guide portion.

In embodiments, the reading head is arranged relative the guide portion to enable a container to travel through the guide portion to the holding position and/or from the holding position to the processing unit without touching the reading head. With such an arrangement the container may slide through the guide portion uninterrupted by the reading head (and only touching the reading head when reading the code in the code reading position, or other loading position). Such an arrangement may reduce sticking of the container in the guide portion.

In embodiments, the positioning mechanism is configured to translate the container with the code reader stationary (e.g. relative the rest of the machine) from the holding position to the reading position. By implementing the container to be displaced to the code reader the code reader can be fixed in a position not to interfere with the transmission of the container through the guide portion, with the container displaced to the code reader when in the guide portion.

In embodiments, the container is translated via a pressing force applied to a base of the storage portion of the container via a pressing element, which is independently actuatable from the guide portion. By having the pressing element actuating through the guide portion, the guide can remain stationary when the container is translated/deformed.

In embodiments, with a flange portion that interconnects the storage portion and the closing member of the container, the guide portion of the machine is arranged to guide the flange portion. The guide portion may comprise a front face engaging portion to engage a front face of the flange (including the portion of the closing member that may overlap the flange portion) and a rear face engaging portion to engage a rear face of the flange, the front face engaging portion and rear face engaging portion separated by a gap greater than a thickness of the flange, such that: the container can pass through the guide portion from the inserted position to the holding position and into the processing unit and; translate from the holding position to the reading position.

By configuring the guide portion to accommodate the translation distance along said code reading axis, the container may conveniently remain in the guide portion whilst translated, which may enable it to be conveniently guided through the machine.

In embodiments, in the reading position the front face engaging portion is in abutment with the front face of the flange portion, and the rear face engaging portion is separated from the rear face of the flange portion. With such an arrangement the front face engaging portion generally pressed into full abutment with the front face of the flange portion such that all parts of said front face touch the flange portion. With the front face portion in full abutment with the front face of the flange, the code may be stably read.

In embodiments, in the holding position the front face engaging portion is at least partially separated from the front face of the flange portion. With such an arrangement, since the guide portion accommodates the flange loosely, in the holding position the container may occupy a range of positions (e.g. depending on how it falls though the guide portion).

In embodiments, the guide portion remains stationary relative to the code reader as the container is moved between the holding position and the reading position. By implement the guide portion to remain in a fixed position relative the code reader it may support the container in both positions whilst being operable to convey the container through the machine.

In embodiments, the positioning mechanism is configured to return the container from the reading position to the holding position (which may be the same holding position as before the code was read or an equivalent holding position) from which the guide portion is arranged to transfer via gravity the container to the processing unit. By returning the read container to the holding position, in which it is separated from the code reader, the container may then pass uninhibited into the processing unit.

In embodiments, the positioning mechanism includes a holding member, which is arrangeable in a closed position to retain the capsule in the holding position and is arrangeable in a transfer position to enable transfer of the capsule to the processing unit. By implement a holding member with said positions an inserted container may be initially retained in the holding position for subsequent reading before being transmitted to the processing unit.

In embodiments, the holding member and pressing element are connected together so that they are dependently actuatable. By joining the holding member and pressing element together, a common actuator may be implemented to actuate both, rather than separate actuation systems.

In embodiments, the closing member is flexible membrane and is arranged to deform to correspond in shape to a reading head of the code reader in the reading position. By arranging the portion of the closing member than includes the code to deform around the reading head, it may be ensured that the code is uniformly presented to the code reader, which may ensure better reading of the code. Moreover, it may enable any debris from the processing unit (e.g. steam or precursor material) that is present on the code and would otherwise interfere with the code reading to be displaced.

In embodiments, the code is arranged on a central region of the closing member. By implementing the code in the central region, it may be ensured that the code is on the most flexible part of the closing member, which may improve reading accuracy by enhancing the aforementioned effects.

In embodiments, the central region of the closing member is arranged to displace by 2 - 6 mm when subject to a pressing force of 15 - 120 N or 40 - 70 N by the reading head. It has been found that such a displacement range when subject to said force presents a uniform reading surface absent of debris.

In embodiments, the positioning mechanism is configured to apply a loading condition to the container, and the code reading system includes a detection system to detect a reading position if a predetermined condition for reading the code is met, and if said condition is met, then the electrical circuitry configured to process/read the code to extract the preparation information in the reading position.

By implementing a detection system to determine if a predetermined condition is met for which the code is arranged in a reading position in which it is suitably positioned for extraction, it can be ensured that reading only occurs when accurate extraction of the information is possible. Such an implementation may for example, avoid the extraction of erroneous preparation information that would implement incorrect control of the processing unit.

As used herein the term "detect" may refer to electrical circuitry of the detection system repetitively or continuously monitoring a variable during a loading condition to and determine if a threshold has been crossed. The detection of the detection system may be triggered by initiation of the loading condition.

As used herein the term "loading condition" may refer to the application of load (e.g. a force and/or a displacement) to the container (e.g. to one or more of the storage portion, flange portion and closing member) to effect a deformation and/or translation of the container. The loading condition may not be applied in the holding position. The application of the loading condition may designate an initiation of the loading position, for which the load can be increased and/or decreased. The loading condition may refer to a load cycle, which may comprise a combination of a load increasing phase and optionally a load decreasing phase. The load increasing phase, may comprises the increasing of the load until the predetermined condition for reading the code is met or a threshold maximum load of the positioning mechanism is exceeded. The load may be increased with various loading profiles, including linear, curved or stepped or combinations thereof. The load decreasing phase may comprise decreasing the load to return the container to the holding position.

As used the term "suitably positioned for extraction" may refer to an arrangement between the code and the code reader such that the preparation information can be fully and/or accurately (e.g. without read errors) extracted. It may also obviate computationally intensive error correction programs to correct read errors.

As used herein the term "extract" in respect of the preparation information may refer to the reading of a data portion of the code to decode the preparation information it stores. Extraction may be part of a code reading process. However, a code may be read, e.g. to identify parts of the code without extraction, e.g. the code may be arranged with sufficient accuracy to enable its location and location of portions forming the code (e.g. including a finder portion and a data portion) however the code may not be arranged for subsequent accurate/full extraction of the preparation information.

In embodiments, a loading condition is applied to transfer the container from the holding position to the reading position. A loading position may be defined as any position in which the loading condition is applied, it may therefore include the reading position.

In embodiments, the loading condition is variable (e.g. the condition may comprise applying a varying force and/or displacement to a container) to selectively deform the body portion of the container. By implementing a variable loading condition, a wide range of different containers may be processed to a reading position. For example, a displacement and/or force history can be adapted to the particular container. The positioning mechanism may automatically adjust the variable loading condition to the container.

In embodiments, the loading condition is variable based on a geometric dimension of the container. The geometric dimension may be the depth e.g., of the body portion from the closing member. The depth may designate large, medium and small sized containers, hence by adapting the loading condition to depth, different sized beverages and/or food stuffs may be provided by the machine. For example, for containers with less depth the same force may be applied as for those with a greater depth, but over a shorter displacement range.

In embodiments, the loading condition is variable based on a stiffness of the container. By adapting the loading condition to stiffness, different container materials may be processed.

In embodiments, the predetermined condition for reading the code comprises a first condition and optionally a different second condition being met. By implementing a first and second condition, multiple conditions can be accounted for to provide increased accuracy.

In embodiments, the first condition is based on a force applied to the container by the positioning mechanism having crossed a threshold or being at a target force threshold. By implementing a force threshold, it may be ensured that the precursor material is not over compacted.

As used herein the term "based on a force applied to the container" may refer to actual measurement of force, e.g. via a loadcell, or via a quantity representative of force.

In embodiments, the force applied is based on an electrical current applied to a drive system for the positioning mechanism. By basing the force on the electrical current applied to the drive system (including any electrical quantity related thereto or derived therefrom e.g. electrical power) a convenient measurement of force may be provided without a dedicated sensor.

In embodiments, the second condition is based on a displacement applied to the container by the positioning mechanism having crossed a threshold. By implementing a displacement related threshold it may be ensured that the container is not over deformed. Such an implementation may be advantageous for highly flexible or containers that are comparatively short in the depth direction, since these deform substantially under low force hence the force threshold is unlikely to be crossed but the displacement threshold is more appropriate.

As used herein the term "based on a displacement applied to the container" may refer to any displacement related quantity, it can include actual displacement or a first or second order derivative (a derivative) of the displacement. In an embodiment, the first order derivative reducing to below a threshold is implemented. By implementing the first order derivative of the displacement, the threshold may be crossed when there is minimal further change in displacement for a given time and an initial large displacement for a given time is passed. Such an implementation allows the same condition for different depth containers to be considered, were having a pre-set displacement amount would not be applicable.

In embodiments, the predetermined condition determined from a digital image of the code. Such an arrangement may obviate the need for a complicated dedicated detection system.

In embodiments, the electrical circuitry implements a smoothing system to reduce fluctuations in the determined force and/or displacement applied. By implementing a smoothing system (e.g. as signal processing) unrepresentative fluctuations in the determined force or displacement applied may prevent the displacement or force thresholds from being erroneously triggered.

In embodiments, the positioning mechanism is arranged to apply said loading condition as increasing in magnitude (e.g. as the load increasing phase of the load cycle) and the detection system is arranged to determine said predetermined condition during the application of the increasing in magnitude load condition. By progressively increasing the force and/or displacement applied to the container, and repetitively deterring if said predetermined condition is met, said quantities may be increased until one of the associated thresholds is crossed.

In embodiments, the electrical circuitry is configured to maintain a load condition as the same (including substantially the same) as when the predetermined condition is met and to read the code with the container subject said maintained load condition. By maintaining the container at the predetermined condition whilst it is read, accurate reading of the code may be provided.

In embodiments, the electrical circuitry is configured to control the positioning mechanism to reapply the variable loading condition if the predetermined condition for reading the code is not met. In embodiments, the electrical circuitry is configured to control the positioning mechanism to reapply the loading condition if it is determined when processing the code (e.g. with code processing circuitry) that it can not be read. By effecting moving the container from the reading position at least partially to the undeformed configuration and/or holding position (e.g. as the load decreasing phase of the load cycle subsequent to the load increasing phase) and then returning it to the reading position, reading accuracy may be improved.

In embodiments, the code reading system includes a code reader to obtain a digital image of the code, and the code reading system includes electrical circuitry to determine from the digital image of the code if the container is in a reading position based on a predetermined condition (e.g. of the digital image of the code), and if said condition is met, then the electrical circuitry configured to process/read the code to extract the preparation information in the reading position.

By basing the predetermined condition to determine if the code is suitably spatially positioned for reading on one or more features in the digital image of the code, other more complex means (e.g. mechanical sensors or actuators) for determining if the code is suitably positioned may be obviated. Moreover, unnecessary processing of the code to extract the preparation information is obviated for a code that is not suitably positioned.

In embodiments, the predetermined condition may be determined from the digital image of the code by a distinct, separate process that is not part of processing the code to extract the preparation information.

In embodiments the predetermined condition is based on a geometric property of the code. As used herein the term "geometric property" in respect of the code may refer to a dimension, angle, or other property defined by one or more units that form the code and/or a surround that the code is arranged on. By using a geometric property it may be determined if the code is suitably arranged as a first step which if passed the more computationally intensive step process for extracting the preparation information is executed, hence the suitability of the code's arrangement may be determined with minimal additional processing.

It will be understood that since the code reader implements a fixed lens and image sensor position, the geometric property is related to the distance of the code away from the code reader, hence if the code is too far away more deformation of the container may be required to enable reliable code reading.

In embodiments, the geometric property is based on a size of one or more units forming the code crossing a threshold size. In embodiments, the geometric property is based on a number of units forming the code arranged within a predetermined area crossing a threshold. In embodiments, the geometric property is based a geometric pattern of the code, e.g. that of a finder portion of the code. In embodiments, the code is formed of units which are 50 - 200 µm, and are arranged within an area of 600 - 1600 µm.

In embodiments, the determination if a predetermined condition for reading the code is met is based on an optical property of the code of units forming the code, e.g. the units and/or surround of the code. By using an optical property it may be determined if the code is suitably arranged prior to any processing of the code, hence unnecessary processing steps of the code are obviated. In particular, a luminance of the surround may be determined. Since the code reader incorporates a light source for reading, for a light coloured surround and comparatively dark coloured code units, an observed luminance of the surround may approach that of the code units the further away the code is from the code reader, hence a condition of contact or close proximity of the code to the code reader may be determined when the surround appears comparatively light in colour.

As used herein the term "optical property" may refer to features of light reflected or emitted from or passing through the code and/or surround, it may include a luminance (e.g. within a given solid angle) absorbance or other optical property.

In embodiments, the code reading system includes a positioning mechanism to apply a loading condition to transfer the container the reading position, and the digital image is obtained in the reading position. In embodiments, the positioning mechanism is arranged to apply said loading condition as a increasing in magnitude and the detection system is arranged to determine said predetermined condition during the application of the increasing in magnitude load condition. By repetitively determining whether the predetermined condition is met as the load condition is increased, loading may be paused when said condition is met without applying too much load to the container. In embodiments, the electrical circuitry is configured to maintain the load condition as the same as when the predetermined condition is met and to read the code with the container subject said maintained load condition. In embodiments, the electrical circuitry is configured to control the positioning mechanism to reposition the container in the reading position if the predetermined condition for reading the code is not met and/or it is determined when processing the code that it can not be read.

The present invention provides a machine for preparing a beverage and/or foodstuff from a container according to claim 11.

According to the present invention, the positioning mechanism is arranged to deform a body portion of the container from an undeformed configuration to a deformed configuration, wherein the positioning mechanism adapted to deform the body portion in the deformed configuration to effect subsequent deformation of the closing member so that it presents a comparatively more uniform surface for reading the code.

According to the present invention, the positioning mechanism is arranged to translate along an axis the container and code reader relative to each other from a holding position, in which the container is separated from a reading head of the code reader and the code is aligned along said axis with the code reader, to a reading position, in which the code of the container is in contact with the reading head.

In embodiments, the code reading system includes a positioning mechanism to apply a loading condition to the container, and the code reading system includes a detection system to detect, a reading position, if a predetermined condition for reading the code is met, and if said condition is met, which is based on a force and/or displacement applied to the container, then the electrical circuitry configured to process/read the code to extract the preparation information in the reading position.

In embodiments, the code reading system including a code reader to obtain a digital image of the code, and the code reading system includes a electrical circuitry to determine from the digital image of the code if the container is in a reading position based on a predetermined condition, and if said condition is met, then the electrical circuitry configured to process the code to extract the preparation information in the reading position.

The present disclosure provides a container, which may be for use with the machine of any preceding embodiment or another embodiment disclosed herein, wherein the container comprises: a body portion with a storage portion comprising a cavity that extends in a depth direction for containing a precursor material and with a flange portion connecting the storage portion and closing member; a closing member to close the storage portion, and; a machine-readable code storing preparation information, said code may be arranged on a central region of the closing member, wherein the container is deformable by the machine from an undeformed configuration to a deformed configuration in which the code is readable by the code reader, wherein in the deformed configuration the central region of the closing member is displaced in a counter depth direction by 2 - 6 mm (e.g. in the reading position relative an unloaded holding position) when the container is subject to a three point bending in a lateral direction, which comprises: supporting the container at left and right sides of the flange portion and applying a force between said left and right sides of the container in the counter depth direction at a base of the storage portion of 15 - 120 N.

It has been found that such a force range and displacement is sufficient to remove any wrinkles or creases or other discontinuities from the closing member, which may improve code reading accuracy without over compaction of the precursor material.

In embodiments, the central region of the closing member is arranged to displace by 2 - 6 mm when subject to a pressing force of 15 - 120 N by the reading head of the code reader. It has been found that such a displacement range when subject to said force presents a uniform reading surface absent of debris.

In embodiments, the closing member is arranged as a flexible membrane. The membrane may be arranged as a laminate of multiple layers. The laminate may include a layer of a paper based material and a polymer based material.

In embodiments, the material of the closing member has a total (e.g. a combined thickness of all layers) thickness of 0.15 mm ± 10, 20 or 30%. It has been found that such a thickness range provides adequate structural support, whilst remaining conveniently penetrable by an injector or perforable by the machine.

In embodiments, the material of the body portion has a total (e.g. a combined thickness of all layers) thickness of 0.2 mm ± 10, 20, 30% or 40%. It has been found that such a thickness range provides adequate structural support, whilst remaining conveniently penetrable by an injector. In embodiments, the storage portion is cylindrical with a diameter of 4 cm - 7 cm and/or a depth of 5 mm - 25 mm.

In embodiments, the system comprises a plurality of containers with a storage portion of different depth, the positioning mechanism configured to transfer said containers from the holding position to the reading position and to read the code of each container.

The present disclosure provides use of the container of any preceding embodiment or another embodiment disclosed herein for a machine for preparing a beverage and/or foodstuff.

The present disclosure provides a method of reading a code of a container for containing a precursor material for preparing a beverage and/or foodstuff. The method may be implemented as part of a process for preparing a beverage and/or foodstuff.

In embodiments, the method comprises: deforming a body portion of the container to effect subsequent deformation of a closing member of the container, and; reading a code from the closing member.

In embodiments, the method comprises translating the container relative a code reader from a holding position in which the container is separated from the code reader and the code is aligned with the code reader, to a reading position in which the code of the container is in contact with the code reader, and; reading the code.

In embodiments, the method comprises: applying a loading condition to the container; determining a reading position if a predetermined condition for reading the code is met, and if met; processing the code to extract the preparation information in the reading position.

In embodiments, the method comprises: obtaining a digital image of the code; determining if a predetermined condition for reading the code is met from the digital image of the code, and if met; reading/processing the code to extract the preparation information.

The present disclosure provides electrical circuitry to implement the method of the preceding embodiment, or another embodiment disclosed herein.

The present disclosure provides a computer readable medium comprising program code to implement the method of the preceding embodiment, or another embodiment disclosed herein.

The present disclosure provides a kit of parts comprising the machine of any preceding embodiment or another embodiment disclosed herein and a plurality of containers of any preceding embodiment or another embodiment disclosed herein, wherein the containers have storage portions with different depths and are suitable for use with said machine.

The preceding summary is provided for purposes of summarizing some embodiments to provide a basic understanding of aspects of the subject matter described herein. Accordingly, the above-described features are merely examples and should not be construed to narrow the scope of the subject matter described herein in any way.

Other features, aspects, and advantages of the subject matter described herein will become apparent from the following Detailed Description of Embodiments, Brief Description of Figures, and Claims.

### BRIEF DESCRIPTION OF FIGURES

Aspects, features and advantages of embodiments of the present disclosure will become apparent from the following detailed description of embodiments in reference to the appended drawings in which like numerals denote like elements.
Figure 1 is a block system diagram showing an embodiment system for preparation of a beverage or foodstuff.
Figure 2 is a block system diagram showing an embodiment machine of the system of figure 1.
Figure 3 is an illustrative diagram showing an embodiment fluid conditioning system of the machine of figure 2.
Figures 4 and 5 are illustrative diagrams showing an embodiment container processing system of the machine of figure 2 on open and closed positions.
Figure 6 is a block diagram showing embodiment control electrical circuitry of the machine of figure 2.
Figure 7 is an illustrative diagram showing an embodiment container of the system of figure 1.
Figure 8 is flow diagram showing an embodiment preparation process, which is performed by the system of figure 1.
Figure 9 is a plan view showing an embodiment code of the containers of the system of figure 1.
Figures 10 and 11 are flow diagrams showing embodiment processes for extracting preparation information from the code of figure 9.
Figures 12 to 14 are plan views showing an embodiment code reading system of the system of figure 1.
Figures 15 and 16 are illustrative diagrams showing the code reading system of figures 12 - 14.
Figures 17 and 18 are plan views showing an embodiment code reading system of the system of figure 1.
Figure 19 is a flow diagram showing an embodiment process for extracting preparation information from the code of figure 9.
Figure 20 is a graphical plot showing force and displacement applied to a container of the system of figure 1.
Figures 21 to 23 are plan views showing codes of figure 9 and a predetermined condition determined therefrom.

### DETAILED DESCRIPTION OF EMBODIMENTS

Before describing several embodiments of the system, it is to be understood that the system is not limited to the details of construction or process steps set forth in the following description. It will be apparent to those skilled in the art having the benefit of the present disclosure that the system is capable of other embodiments and of being practiced or being carried out in various ways.

The present disclosure may be better understood in view of the following explanations:
As used herein, the term "**machine**" may refer to an electrically operated device that: can prepare, from a precursor material, a beverage and/or foodstuff, or; can prepare, from a pre-precursor material, a precursor material that can be subsequently prepared into a beverage and/or foodstuff. For convenience, a machine that prepares a beverage and/or foodstuff can also refer to the preparation of a precursor for a beverage and/or foodstuff prepared from a pre-precursor material. The machine may implement said preparation by one or more of the following processes: dilution; heating; cooling; mixing; whisking; dissolution; soaking; steeping; extraction; conditioning; infusion; grinding, and; other like process. The machine may be dimensioned for use on a work top, e.g. it may be less than 70 cm in length, width and height. As used herein, the term "**prepare**" in respect of a beverage and/or foodstuff may refer to the preparation of at least part of the beverage and/or foodstuff (e.g. a beverage is prepared by said machine in its entirety or part prepared to which the end-user may manually add extra fluid prior to consumption, including milk and/or water).

As used herein, the term "**container**" may refer to any configuration to contain the precursor material, e.g. as a single-serving, pre-portioned amount. The container may have a maximum capacity such that it can only contain a single-serving of precursor material. The container may be single use, e.g. it is physically altered after a preparation process, which can include one or more of: perforation to supply fluid to the precursor material; perforation to supply the beverage/foodstuff from the container; opening by a user to extract the precursor material. The container may be configured for operation with a container processing unit of the machine, e.g. it may include a flange for alignment and directing the container through or arrangement on said unit. The container may include a rupturing portion, which is arranged to rupture when subject to a particular pressure to deliver the beverage/foodstuff. The container may have a membrane for closing the container. The container may have various forms, including one or more of: frustoconical; cylindrical; disk; hemispherical; packet; other like form. The container may be formed from various materials, such as metal or plastic or a combination thereof. The material may be selected such that it is: food-safe; it can withstand the pressure and/or temperature of a preparation process, and; it is biodegradable. The container may be defined as a capsule, wherein a capsule may have an internal volume of 20 - 100 ml. The capsule includes a coffee capsule, e.g. a Nespresso^{®} or Nescafé^{®} capsule (including a Classic, Professional, Vertuo, Dolce Gusto or other capsule). The container may be defined as a receptacle, wherein a receptacle may have an internal volume of 150 - 350 ml. The receptacle is typically for end user consumption therefrom, and includes a pot, for consumption via an implement including a spoon, and a cup for drinking from. The container may be defined as a packet, wherein the packet is formed from a flexible material, including plastic or foil. A packet may have an internal volume of 150 - 350 ml or 200 - 300 ml or 50 - 150 ml.

As used herein, the term "**external device**" or "**external electronic device**" or "**peripheral device**" may include electronic components external to the machine, e.g. those arranged at a same location as the machine or those remote from the machine, which communicate with the machine over a computer network. The external device may comprise a communication interface for communication with the machine and/or a server system. The external device may comprise devices including: a smartphone; a PDA; a video game controller; a tablet; a laptop; or other like device.

As used herein, the term "**server system**" may refer to electronic components external to the machine, e.g. those arranged at a remote location from the machine, which communicate with the machine over a computer network. The server system may comprise a communication interface for communication with the machine and/or the external device. The server system can include: a networked-based computer (e.g. a remote server); a cloud-based computer; any other server system.

As used herein, the term "**beverage**" may refer to any substance capable of being processed to a potable substance, which may be chilled or hot. The beverage may be one or more of: a solid (e.g. a solid suspended in a liquid); a liquid; a gel; a paste. The beverage may include one or a combination of: tea; coffee; hot chocolate; milk; cordial; vitamin composition; herbal tea/infusion; infused/flavoured water, and; other substance. As used herein, the term "**foodstuff**" may refer to any substance capable of being processed to a nutriment for eating, which may be chilled or hot. The foodstuff may be one or more of: a solid; a liquid; a gel; a paste. The foodstuff may include: yoghurt; mousse; parfait; soup; ice cream; sorbet; custard; smoothies; other substance. It will be appreciated that there is a degree of overlap between the definitions of a beverage and foodstuff, e.g. a beverage can also be a foodstuff and thus a machine that is said to prepare a beverage or foodstuff does not preclude the preparation of both.

As used herein, the term "**precursor material**" may refer to any material capable of being processed to form part or all of the beverage or foodstuff. The precursor material can be one or more of a: powder; crystalline; liquid; gel; solid, and; other. Examples of a beverage forming precursor material include: ground coffee; milk powder; tea leaves; coco powder; vitamin composition; herbs, e.g. for forming a herbal/infusion tea; a flavouring, and; other like material. Examples of a foodstuff forming precursor material include: dried vegetables or stock as anhydrous soup powder; powdered milk; flour based powders including custard; powdered yoghurt or ice-cream, and; other like material. A precursor material may also refer to any pre-precursor material capable of being processed to a precursor material as defined above, i.e. any precursor material that can subsequently be processed to a beverage and/or foodstuff. In an example, the pre-precursor material includes coffee beans which can be ground and/or heated (e.g. roasted) to the precursor material.

As used herein, the term "**fluid**" (in respect of fluid supplied by a fluid conditioning system) may include one or more of: water; milk; other. As used herein, the term "**conditioning**" in respect of a fluid may refer to to change a physical property thereof and can include one or more of the following: heating or cooling; agitation (including frothing via whipping to introduce bubbles and mixing to introduce turbulence); portioning to a single-serving amount suitable for use with a single serving container; pressurisation e.g. to a brewing pressure; carbonating; fliting/purifying, and; other conditioning process.

As used herein, the term "**processing unit**" may refer to an arrangement that can process precursor material to a beverage or foodstuff. It may refer to an arrangement that can process a pre-precursor material to a precursor material.

As used herein, the term "**container processing unit**" may refer to an arrangement that can process a container to derive an associated beverage or foodstuff from a precursor material. The container processing unit may be arranged to process the precursor material by one of more of the following: dilution; heating; cooling; mixing; whisking; dissolution; soaking; steeping; extraction; conditioning; pressurisation; infusion, and: other processing step. The container processing unit may therefore implement a range of units depending on the processing step, which can include: an extraction unit (which may implement a pressurised and/or a thermal, e.g. heating or cooling, brewing process); a mixing unit (which mixes a beverage or foodstuff in a receptacle for end user consumption therefore; a dispensing and dissolution unit (which extracts a portion of the precursor material from a repository, processes by dissolution and dispenses it into a receptacle), and: other like unit.

As used herein, the term "**electrical circuitry**" or "**circuitry**" or "**control electrical circuitry**" may refer to one or more hardware and/or software components, examples of which may include: an Application Specific Integrated Circuit (ASIC); electronic/electrical componentry (which may include combinations of transistors, resistors, capacitors, inductors etc); one or more processors; a non-transitory memory (e.g. implemented by one or more memory devices), that may store one or more software or firmware programs; a combinational logic circuit; interconnection of the aforesaid. The electrical circuitry may be located entirely at the machine, or distributed between one or more of: the machine; external devices; a server system.

As used herein, the term "**processor**" or "**processing resource**" may refer to one or more units for processing, examples of which include an ASIC, microcontroller, FPGA, microprocessor, digital signal processor (DSP), state machine or other suitable component. A processor may be configured to execute a computer program, e.g. which may take the form of machine readable instructions, which may be stored on a non-transitory memory and/or programmable logic. The processor may have various arrangements corresponding to those discussed for the circuitry, e.g. on-board machine or distributed as part of the system. As used herein, any machine executable instructions, or computer readable media, may be configured to cause a disclosed method to be carried out, e.g. by the machine or system as disclosed herein, and may therefore be used synonymously with the term method, or each other.

As used herein, the term "**computer readable medium/media**" or "**data storage**" may include any medium capable of storing a computer program, and may take the form of any conventional non-transitory memory, for example one or more of: random access memory (RAM); a CD; a hard drive; a solid state drive; a memory card; a DVD. The memory may have various arrangements corresponding to those discussed for the circuitry.

As used herein, the term "**communication resources**" or "**communication interface**" may refer to hardware and/or firmware for electronic information transfer. The communication resources/interface may be configured for wired communication ("wired communication resources/interface") or wireless communication ("wireless communication resources/interface"). Wireless communication resources may include hardware to transmit and receive signals by radio and may include various protocol implementations e.g. the 802.11 standard described in the Institute of Electronics Engineers (IEEE) and Bluetooth^{™} from the Bluetooth Special Interest Group of Kirkland Wash. Wired communication resources may include; Universal Serial Bus (USB); High-Definition Multimedia Interface (HDMI) or other protocol implementations. The machine may include communication resources for wired or wireless communication with an external device and/or server system.

As used herein, the term "**network**" or "**computer network**" may refer to a system for electronic information transfer between a plurality of apparatuses/devices. The network may, for example, include one or more networks of any type, which may include: a Public Land Mobile Network (PLMN); a telephone network (e.g. a Public Switched Telephone Network (PSTN) and/or a wireless network); a local area network (LAN); a metropolitan area network (MAN); a wide area network (WAN); an Internet Protocol Multimedia Subsystem (IMS) network; a private network; the Internet; an intranet.

As used herein, the term "**code**" may refer to a storage medium that encodes preparation information. The code may be an optically readable code, e.g. a bar code. The code may be arranged as a bit code (e.g. a binary sequence of 0s and 1s encoded by the absence or presence of an element). The code may be formed of a plurality of units, which can be referred to as elements or markers. The elements may implement a finder portion and a data portion, wherein the finder portion encodes a predefined reserved string of bits that is identifiable when processing the code from the data portion, to enable location of the data portion, which encodes the preparation information. The code may be arranged as a one dimensional code, which is read by relative movement between the code and a code reader. The code reader may provide a bit stream signal or a high and low signal for processing by preparation information extraction. The code may be arranged as a two dimensional code, which is processed via a digital image obtained from a camera of the code reader. It will be understood that a code may therefore exclude a mere surface finish or branding on a container, which is not configured in any way for information storage.

As used herein the term "**preparation information**" may refer to one of more of: parameters as defined herein; a recipe as defined herein; an identifier, and; other information related to the operation of the machine.

As used herein, the term "**parameter**" may refer to a variable that is used as an input for controlling (e.g. RPM) and/or or a property of the beverage/foodstuff or a precursor thereof that is controlled by the processing unit (e.g. a fluid target temperature or volume) during the preparation process. Depending on the implementation of the processing unit said parameter may vary. Examples include: volume of a particular component of the beverage and/or foodstuff; fluid temperature; fluid flow rate; operational parameters of the processing unit, e.g. RPM of an extraction unit based on centrifugation or closing force for a hydraulic brewing unit; an order of dispensing of components of the beverage and/or foodstuff; agitation (e.g. frothing degree); any of the aforesaid defined for one or more phases, wherein the preparation process is composed of a series of sequential, discrete phases. The parameter may have a value, which may be numerical and can vary in predetermined increments between predetermined limits, e.g. a temperature of the water may vary between 60 - 90 degrees in 5 degree increments.

As used herein, the term "**recipe**" or "**control data set**" may refer to a combination of said parameters, e.g. as a full or partial set of inputs, that are used by the processing unit to prepare a particular beverage and/or food stuff.

As used herein, the term "**preparation process**" may refer to a process to prepare a beverage or foodstuff from a precursor material or to prepare a pre-precursor material from precursor material. A preparation process may refer to the processes electrical circuitry executes to control the processing unit to process said precursor or pre-precursor material.

As used herein, the term "**code reading process**" may refer to the process of reading the code to extract the preparation information (which can include the identifier and/or parameters). The process may include one or more of the following steps: obtaining a digital image of the code or a code signal; extracting a sequence of bits from the code; identifying a finder portion of the code in the sequence; locating a data portion using the finder portion, and; extracting the preparation information from the data portion.

### [General system description]

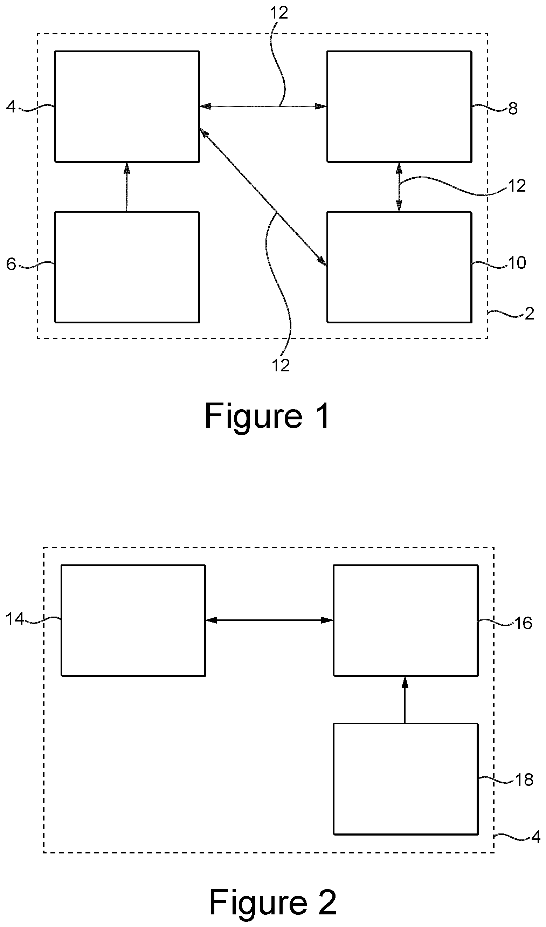

Referring to figure 1, the system **2** comprises a machine **4,** a container **6,** server system **8** and a peripheral device **10.** The server system **8** is in communication with the machine **4** via a computer network **12.** The peripheral device **10** is in communication with the machine **4** via the computer network **12.**

In variant embodiments, which are not illustrated: the peripheral device and/or server system is omitted.

Although the computer network **12** is illustrated as the same between the machine **4,** server system **8** and peripheral device **10,** other configurations are possible, including: a different computer network for intercommunication between each device: the server system communicates with the machine via the peripheral device rather than directly. In a particular example: the peripheral device communicates with the machine via a wireless interface, e.g. with a Bluetooth^{™} protocol, and; the server system communicates with the machine via a via a wireless interface, e.g. with a IEE 802.11 standard, and also via the internet.

### [Machine]

Referring to figure 2, the machine **4** comprises: a processing unit **14** for processing the precursor material; electrical circuitry **16,** and; a code reading system **18.**

The electrical circuitry **16** controls the code reading system **18** to read a code (not illustrated in figure 2) from the container **6** and determine preparation information therefrom. The electrical circuitry **16** uses the preparation information to control the processing unit **14** to execute a preparation process, in which the precursor material is process to a beverage or foodstuff or a precursor thereof.

### [First example of Processing unit]

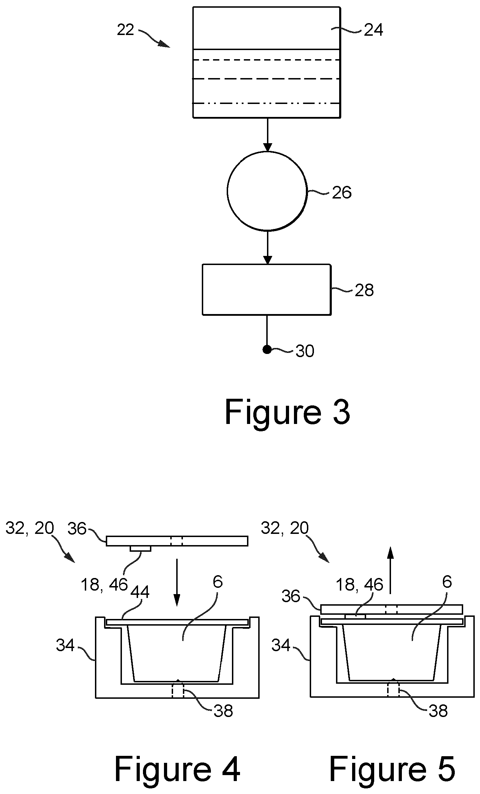

Referring to figures 3, 4 and 5, in a first example of the processing unit **14,** said unit comprises a container processing unit **20** and a fluid conditioning system **22.**

The container processing unit **20** is arranged to process the container **6** to derive a beverage or foodstuff from precursor material (not illustrated) therein. The fluid conditioning system **22** conditions fluid supplied to the container processing unit **20.** The electrical circuitry **16** uses the preparation information read from the container **6** to control the container processing unit **20** and the fluid conditioning system **22** to execute the preparation process.

### [Fluid conditioning system]

Referring to figure 3, the fluid conditioning system **22** includes a reservoir **24;** pump **26;** heat exchanger **28,** and; an outlet **30** for the conditioned fluid. The reservoir **24** contains fluid, typically sufficient for multiple preparation processes. The pump **26** displaces fluid from the reservoir **24,** through the heat exchanger **26** and to the outlet **30** (which is connected to the container processing unit **20**). The pump **26** can be implement as any suitable device to drive fluid, including: a reciprocating; a rotary pump; other suitable arrangement. The heat exchanger **28** is implemented to heat the fluid, and can include: an in-line, thermo block type heater; a heating element to heat the fluid directly in the reservoir; other suitable arrangement.

In variant embodiments, which are not illustrated: the pump is omitted, e.g. the fluid is fed by gravity to the container processing unit or is pressurised by a mains water supply; the reservoir is omitted, e.g. water is supplied by a mains water supply; the heat exchanger is arranged to cool the fluid, e.g. it may include a refrigeration-type cycle heat pump; the heat exchanger is omitted, e.g. a mains water supply supplies the water at the desired temperature; the fluid conditioning system includes a filtering/purification system, e.g. a UV light system, a degree of which that is applied to the fluid is controllable; a carbonation system that controls a degree to which the fluid is carbonated.

### [Container processing unit]

The container processing unit **20** can be implemented with a range of configurations, as illustrated in examples 1 - 6 below. Generally, in examples where the machine **2** comprises a guide portion, in to which a container is inserted and is guided by gravity (e.g. under its own weight) to the container processing unit **20,** the container processing unit **20** is arranged with a container holding portion and a closing portion, which are movable between a container receiving position and a container processing position in a depth direction, which is perpendicular (including substantially perpendicular) to a direction of transmission of the guide portion.

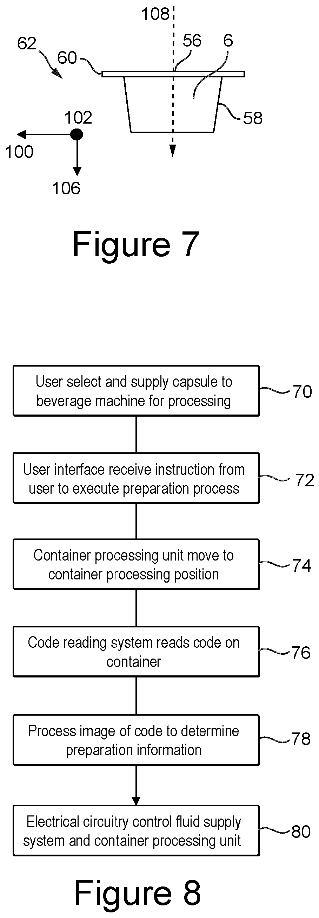

Referring to figures 4 and 5, a first example of the container processing unit **20** is for processing of a container arranged as a capsule **6** (a suitable example of a capsule is provided in figure 7, which will be discussed) to prepare a beverage. The container processing unit **20** is configured as an extraction unit **32** to extract the beverage from the capsule **6.** The extraction unit **32** includes a capsule holding portion **34** and a closing portion **36.** The extraction unit **32** is movable to a capsule receiving position (figure 4), in which capsule holding portion **34** and a closing portion **36** are arrange to receive a capsule **6** therebetween. The extraction unit **32** is movable to a capsule extraction position (figure 5), in which the capsule holding portion **34** and a closing portion **36** form a seal around a capsule **6,** and the beverage can be extracted from the capsule 6. The extraction unit **32** can be actuator driven or manually movable between said positions.

The outlet **30** of the fluid conditioning system **22** is arranged as an injection head **38** on the capsule holding portion **34** to inject the conditioned fluid into the capsule **6** in the capsule extraction position, typically under high pressure. A beverage outlet **40** on the closing portion **36** is arranged to capture the extracted beverage and convey it from the extraction unit **32.**

The extraction unit **32** is arranged to prepare a beverage by the application of pressurised (e.g. at 10 - 20 Bar), heated (e.g. at 50 - 98 degrees C) fluid to the precursor material within the capsule **6.** The pressure is increased over a predetermined amount of time until a pressure of a rupturing portion (not illustrated in figures 4 and 5) of the capsule **6** is exceeded, which causes rupture of said portion and the beverage to be dispensed to the beverage outlet **40.**

In variant embodiments, which are not illustrated, although the injection head and beverage outlet are illustrated as arranged respectively on the capsule holding portion and closing portion, they may be alternatively arranged, including: the injection head and beverage outlet are arranged respectively on the closing portion capsule holding portion and; or both on the same portion. Moreover, the extraction unit may include both parts arranged as a capsule holding portion, e.g. for capsules that are symmetrical about the flange, including a Nespresso^{®} Professional capsule. Examples of suitable extraction units are provided in EP 1472156 A1 and in EP 1784344 A1 and provide a hydraulically sealed extraction unit.

In a second example (which is not illustrated) of the container processing unit a similar extraction unit to the first example is provided, however the extraction unit operates at a lower pressure and by centrifugation. An example of a suitable capsule is a Nespresso^{®} Vertuo capsule. A suitable example is provided in EP 2594171 A1. With such an example (or indeed the other examples) a guide portion may be obviated and the container manually loaded into the extraction unit.

In a third example, (which is not illustrated) the capsule processing unit operates by dissolution of a beverage precursor that is selected to dissolve under high pressure and temperature fluid. The arrangement is similar to the extraction unit of the first and second example, however the pressure is lower and therefore a sealed extraction unit is not required. In particular, fluid can be injected into a lid of the capsule and a rupturing portion is located in a base of a storage portion of the capsule. An example of a suitable capsule is a or Nescafé^{®} Dolce Gusto capsule. Examples of suitable extraction units are disclosed in EP 1472156 A1 and in EP 1784344 A1.

In a fourth example, (which is not illustrated) wherein the container is arranged as a packet, the container processing unit implements an extraction unit operable to receive the packet and to inject, at an inlet thereof, fluid from the fluid conditioning system. The injected fluid mixes with precursor material within the packet to at least partially prepare the beverage, which exits the packet via an outlet thereof. An example of such an arrangement is provided in WO2014125123 A1 or in WO2022023578A1.

In a fifth example, (which is not illustrated) the container processing unit is arranged as a mixing unit to prepare a beverage or foodstuff precursor that is stored in a container that is a receptacle, which is for end user consumption therefrom. The mixing unit comprises an agitator (e.g. planetary mixer; spiral mixer; vertical cut mixer) to mix and a heat exchanger to heat/cool the beverage or foodstuff precursor in the receptacle. A fluid supply system may also supply fluid to the receptacle. An example of such an arrangement is provided in WO 2014067987 A1.

In a sixth example, (which is not illustrated) the container processing unit is arranged as a dispensing and dissolution unit. The dispensing and dissolution unit is arranged to extract a single serving portion of beverage or foodstuff precursor from a storage portion of the machine (which can include any multi-portioned container including a packet or box). The dispensing and dissolution unit is arranged to mix the extracted single serving portion with the conditioned fluid from the fluid conditioning system, and to dispense the beverage or foodstuff into a receptacle. An example of such an arrangement is provided in EP14167344A.

### [Code reading system]

Referring to figures 4 and 5, the code reading system **18** is arranged to read a code **44** arranged on a lid of the container **6.** The code reading system **18** is integrated with the extraction unit **32** of first example of the container processing unit **20.** The code **44** is read with the extraction unit **32** in the capsule extraction position (as shown in figure 4).

The code reading system **18** includes a code reader **46** with an image capturing unit and a reading head housing the image capturing unit to capture a digital image of the code **44.** Examples of a suitable image capturing unit include a Sonix SN9S102; Snap Sensor S2 imager; an oversampled binary image sensor; other like system.

The electrical circuitry **18** includes image processing circuitry (not illustrated) to identify the code in the digital image and extract preparation information. An example of the image processing circuitry is a Texas Instruments TMS320C5517 processor running a code processing program.

In variant embodiments, which are not illustrated, the code reading system is separate from the container processing unit including: it is arranged in a channel that the user places the container in and that conveys the container to the container processing unit; it is arranged to read a code on a receptacle, which is positioned to receive a beverage from an beverage outlet of a dispensing and dissolution unit. In further variant embodiments, which are not illustrated, the code reading system is arranged to read a code at a different location of the container, e.g. on a flange or containment portion. In further variant embodiments, which are not illustrated, the code is a one dimensional code and is read by relative movement between the code reader and the code to produce a code signal.

### [Control electrical circuitry]

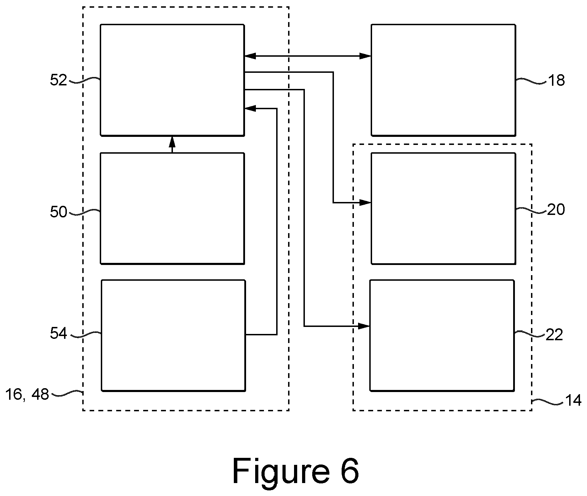

Referring to figure 6, the electrical circuitry **16** is implemented as control electrical circuitry **48** to control the processing unit **14** to execute a preparation process. In the embodiment of figure 6, for illustrative purposes, the processing unit **14** is exemplified as the first example, which comprises a container processing unit **20** and a fluid supply unit **22.**

The electrical circuitry **16, 48** at least partially implements (e.g. in combination with hardware) an: input unit **50** to receive an input from a user confirming that the machine **4** is to execute a preparation process; a processor **52** to receive the input from the input unit **50** and to provide a control output to the processing unit **14,** and; a feedback system **54** to provide feedback from the processing unit **54** during the preparation process, which may be used to control the preparation process.

The input unit **50** is implemented as a user interface, which can include one or more of: buttons, e.g. a joystick button or press button; joystick; LEDs; graphic or character LDCs; graphical screen with touch sensing and/or screen edge buttons; other like device; a sensor to determine whether a container has been supplied to the machine by a user.

The feedback system **54** can implement one or more of the following or other feedback control based operations:
a flow sensor to determine a flow rate/volume of the fluid to the outlet **30** (shown in figure 3) of the fluid supply system **22,** which may be used to meter the correct amount of fluid to the container **6** and thus regulate the power to the pump **26;**
a temperature sensor to determine a temperature of the fluid to the outlet **30** of the fluid supply unit **22,** which may be used to ensure the temperature of fluid to the container **6** is correct and thus regulate the power to the heat exchanger **28**);
a level sensor to determine a level of fluid in the reservoir **24** as being sufficient for a preparation process;
a position sensor to determine a position of the extraction unit **32** (e.g. a capsule extraction position or a capsule receiving position).

It will be understood that the electrical circuitry **16, 44** is suitably adapted for the other examples of the processing unit **14,** e.g.: for the second example of the container processing system the feedback system may be used to control speed of rotation of the capsule.

### [Container]

Referring to figure 7, a first example of a container **6,** that is for use with the first example of the processing unit **14** comprises the container **6** arranged as a capsule **6.** The capsule **6** includes a closing member **56** and a body portion **62,** which comprises a storage portion **58,** and a flange portion **60.**

The storage portion **58** includes a cavity for storage of the precursor material (not illustrated). The cavity of the storage portion extends in a depth direction **106** from the flange portion **60.** Referring to figures 4 and 5, the storage portion **56** is perforated by the injection head **38** to supply conditioned fluid into the capsule.

The storage portion **58** is formed from a paper based material. The storage portion **58** has a thickness of 0.2 mm. The closing member **56** is formed from a paper based material. The closing member **58** has a thickness of 0.15 mm.

As used herein "paper based" may refer to as being formed at least partially from a thin sheet material produced by mechanically or chemically processing cellulose fibres derived from one or more of: wood; rags; grasses, or; other vegetable sources, in water, draining the water through fine mesh leaving the fibre evenly distributed on the surface, followed by pressing and drying.

The closing member **56** closes and may hermitically seal the storage portion **58** and comprises a flexible membrane. Referring to figures 4 and 5, the closing member **56** is perorated to eject the beverage/foodstuff.

The flange portion **60** is formed integrally with the storage portion. The flange portion **60** is arranged at the junction of the storage portion **58** and closing member **56** and comprise a planar extension of the storage portion **58** that is overlapped by a portion of the closing member that is fixed thereto to hermetically seal the precursor material. The flange portion **60** extends in a plane defined by a lateral direction **102** and a longitudinal direction **100.** Hence the closing member is planar in said plane.

The capsule **6** is circular cross sections such that it is rotationally symmetric about axis **108.** In this way a user can present the capsule to the machine **2** with any orientation about the axis **108.** The capsule **6** has a diameter of 53 mm, which is measured across an outer or inner periphery of the flange portion **60** in said plane of the flange portion **60.** The capsule **6** can be configured with different sizes, which are characterised by different depths e.g.: 7 mm; 12 mm; 15 mm; 18 mm, and; 21mm. The capsule **6** in each size is compatible with the first and second examples of the code reading system **18** as will be discussed.

In variant embodiments, which are not illustrated, the closing member may be arranged as convex or concave with respect to the storage portion. For example, for a convex arrangement, a centre of the closing member may extend into the storage portion in the depth direction by up to 1 mm ± 10% or 20%. A minimum concavity maybe 0.2 mm. For example, for a concave arrangement, a centre of the closing member may extend away from the storage portion in the counter depth direction by up to 4 mm ± 10% or 20%. A minimum concavity maybe 0.5 mm.

In variant embodiments, which are not illustrated: the body portion comprises the flange portion formed non-integrally with the storage portion and connected thereto; the body portion comprises the flange portion omitted, e.g. the closing member is wrapped around the storage portion; the container may be a non-rotationally symmetric shape, e.g. square sectioned or other shape; the capsule is alternatively dimensioned, including across an outer or inner periphery of the flange portion is 40 - 70 mm or 53 mm ± 10% or 20% and the depth is any of the described depths ± 10% or 20%; the thickness of the storage portion may have a thickness of 0.1 to 0.4 mm or 0.2 ± 20% or 30%; the thickness of the closing member may have a thickness of 0.05 to 0.3mm or 0.15 ± 20% or 30%, and; the storage portion and/or closing member may be made out of or include a different material, e.g. including a plastics or aluminium based material.

### [Arrangement of Code]

Referring to figure 7, the code **44** code may be arranged on an exterior surface of the container 6 in any suitable position such that it can be read by the code reading system **18.**

In an first example, the code **44** is arranged at a central region of the closing member **56.** The code can therefore be read by any code reader that is aligned to the centre of the container. In an second example, the code is reproduced over the entire closing member so that it can be read from any exterior position on the closing member **56.** With such an arrangement the closing member does not require any specific alignment with the storage portion, which simplifies cutting and assembly processes for the container **6.**

In variant embodiments, which are not illustrated, the code can be arranged on the flange portion **60** (including on either side) and on the storage portion **58.** The code may also be arranged on the closing member but not on the central region.

### [Process for preparing beverage]

Referring to figure 8, a process for preparing a beverage/foodstuff from precursor material is illustrated:
**Block 70:** a user supplies a container **6** to the machine **4.**

**Block 72:** the electrical circuitry **16** (e.g. the input unit **50** thereof) receives a user instruction to prepare a beverage/foodstuff from precursor, and the electrical circuitry **16** (e.g. the processor **52**) initiates the process.

**Block 74:** the electrical circuitry **16** controls the processing unit **14** to process the container (e.g. in the first example of the container processing unit **20,** the extraction unit **32** is moved from the capsule receiving position (figure 4) to the capsule extraction position (figure 5)).

**Block 76:** the electrical circuitry **16** controls the code reading system **18** to provide a digital image of the code **6** of the container.

**Block 78:** the code processing circuitry of the electrical circuitry **16** processes the digital image to extract the preparation information.

**Block 80:** the electrical circuitry **16,** based on the preparation information, executes the preparation process by controlling the processing unit **14.** In the first example of the processing unit this comprises: controlling the fluid conditioning system **22** to supply fluid at a temperature, pressure, and time duration specified in the preparation information to the container processing unit **20.**

The electrical circuitry **16** subsequently controls the container processing unit **20** to move from the capsule extraction portion through the capsule ejection position to eject the container **6** and back to the capsule receiving position.

In variant embodiments, which are not illustrated: the above blocks can be executed in a different order, e.g. **block 72** before **block 70** or **block 76** before **block 74;** some block can be omitted, e.g. where a machine stores a magazine of capsules **block 70** can be omitted.

Blocks **76** and **78** may be referred to a code reading and processing process. Block **80** may be referred to as the preparation process. The electrical circuitry **16,** includes instructions, e.g. as program code, for the preparation process (or a plurality thereof). In an embodiment the processor **52** implements the instructions stored on a memory (not illustrated).

As part of the preparation process, the electrical circuitry **16** can obtain additional preparation information via the computer network **12** from the server system **8** and/or peripheral device **10** using a communication interface (not illustrated) of the machine.

### [Code general description]

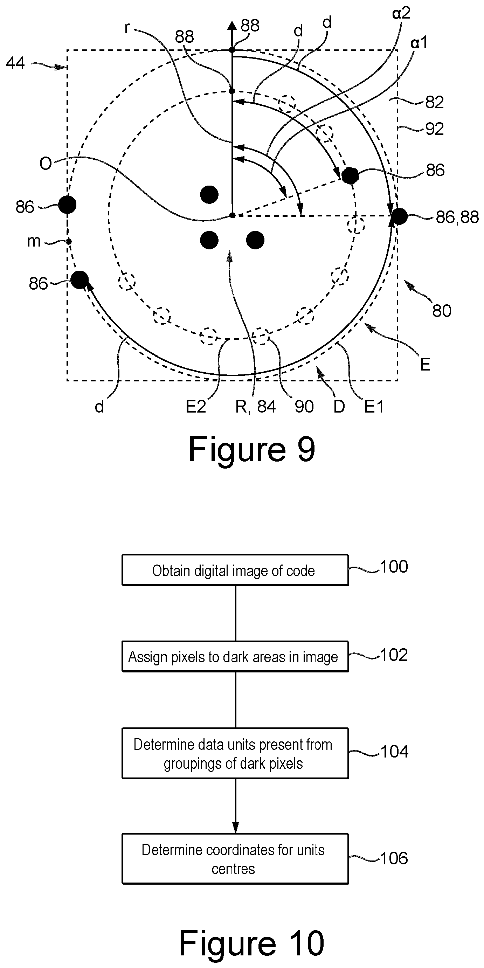

Referring to figure 9, the code **44** is formed of a plurality of circular units **80** arranged on a surround **82.** The units **80** are a dark colour (e.g. including one of the following: black, dark blue, purple, dark green) and the surround **82** is a comparatively light colour (e.g. including one of the following: white, light blue, yellow, light green) such that there is sufficient contrast for the image capturing unit **46** to distinguish therebetween.

The units **80** are circular in shape. As used herein the term "shape" in respect of the units may refer to an exact shape or an approximation of the actual shape, which can occur to a printing or other manufacturing variations in precision.

In variant embodiments, which are not illustrated: the units are a light colour and the surround is a dark colour; the units have a different shape including one or a combination of the following shapes, triangular, polygon, in particular a quadrilateral such as square or parallelogram; other suitable shape.

The units **80** typically have a unit length of 50 - 200 µm. As used herein the term "unit length" in respect of a unit **80** may refer to a suitably defined distance of the unit **80,** e.g.: for a circular shape the diameter; for a square a side length; for a .polygon a distance between opposing or adjacent vertices; for a triangle a hypotenuse. The units **80** are arranged with a precision of about 1 µm.

The units **80** are formed by printing e.g. by means of an ink printer. As an example of printing the ink may be conventional printer ink and the substrate may be: polyethylene terephthalate (PET); aluminium coated with a lacquer (as found on Nespresso Classic capsules) or other suitable substrate.

In variant embodiments, which are not illustrated: the units are alternatively formed, including by embossing, engraving or other suitable means, and; the units are alternatively dimensioned, e.g. a unit length of 80 - 120 µm.

### [Code Generic Organisation]

Referring further to figure 9, the units **80** are organised into a reference portion **R** (also referred to as s reference portion) to locate and determine an orientation of the code **44** and a data portion D to store the preparation information.

The units **80** of the code **44,** which are arranged as the reference portion **R,** comprise three reference units **84.** The reference units **84** have a unique spatial arrangement in the code **44** to allow the reference portion **R** to be identified by the electrical circuitry **16** (e.g. with a stored relationship on a memory thereof) in the digital image. The unique spatial arrangement comprises the reference units **84** arrange at three of the vertices of a virtual rectangle (not illustrated), about an origin **O** at the centre of the rectangle, with specific distances between the reference units **84.**

In variant embodiments, which are not illustrated, the reference portion is alternatively implemented, including: as a different arrangement of reference units, e.g. including as a circle or other shape of rectangle; with a different number of reference units, e.g. including as 4 or 5, and; the reference units may have a unique shape that is identifiable from the shape of the other units forming the code.

The arrangement of the reference units **84** enables the definition of a single reference line **r** at a specific vector relative to said units **84.** The reference line **r** is virtual, and is determined by the electrical circuitry **16** (e.g. with a stored relationship on a memory thereof).

In the particular example, the reference units **84** define, using the right hand rule, a first virtual line (not illustrated) and a second virtual line (not illustrated), wherein: the thumb represents the first virtual line which intersects the centres of two of the refence units **84;** the index finger represents the second virtual line which intersects the centres of two of the refence units, one of which being the common to the first virtual line; the second finger is into the plane of the page of the code **44.** The reference line **r** extends from the origin **O** and is parallel to the first virtual line and is orthogonal to the second virtual line.

In variant embodiments, which are not illustrated, the reference line may be alternatively defined: the may comprise an actual line drawn on the code; it may have an alternative geometric arrangement with respect to the reference units.

Units **80** of the code **44,** which are arranged as the data portion **D,** comprise data units **86.** The data units **86** are arranged on an encoding line **E** that intersects the reference line **r.** The encoding line **E** is virtual and is determined by electrical circuitry **16,** (e.g. the encoding lines have predefined radii, which are stored on a memory thereof). The centre of the circle of the encoding line **E** is arranged at the origin **O** of the reference portion **R.** The reference line **r** therefore intersects the encoding line **E** with a tangent thereto orthogonal to the reference line **r.** There are two encoding lines **E1, E2,** each with data units **86.**

In variant embodiments, which are not illustrated: other numbers of encoding lines are implemented including 3, 4, or 5; the encoding lines may have non-circular shapes, including rectangular or triangular; the encoding line comprises an actual line drawn on the code.

The encoding line **E** includes one or more individual data portions, each of which includes a start position **88** and a data unit **86,** which is arranged at a distance **d** along the encoding line **E** from the start position **88** as a variable to encode a parameter of the preparation information. The start positions **88** are defined virtually and may be determined by electrical circuitry **16** (e.g. the start positions may be stored on a memory thereof).

For the first encoding line **E1,** the data portion includes two individual data portions: for the first individual data portion the distance **d** can be any continuous distance from the start position **88** at the reference line **r** to the first data unit **86** clockwise from the reference line **r;** for the second individual data portion the distance **d** can be any continuous distance from the start position **88** at the data unit **86** of the first individual data portion (hence the start position is variable) to the mid-point m between the subsequent two data units **86** in the clockwise direction.

For the second encoding line **E2,** the data portion includes one individual data portion, for which the distance **d** can be any one of a plurality of discrete distances, which are illustrated as discrete positions **90** from the start position **88** at the reference line **r,** with each position associated with a value of the parameter. In the example there are 10 discrete positions **90.**

In variant embodiments, which are not illustrated: a start position can be arranged at any position on the encoding line, including spaced away from the reference line; there may be multiple start positions on an encoding line, each with an associated data unit; the start position may be formed as part of the code as a unit rather than defined virtually; an encoding line may comprise combinations of parameters encoded by the continuous distance and the discreet positions; more than one or two data units on the encoding line may define the parameter, which can be determined as an average of the positions, and; the data portion can include any suitable number of individual data portions.

The code **44** includes an outer periphery **92** that the units **80** are arranged within. The outer periphery **92** is rectangular in shape and has a dimension of 600 - 1600 µm, or about 1100 µm. The code **44** may be repeated such that multiple repetitions of the code **44** are arranged within a single digital image, such that one or several best captured repetitions of the code can be selected for processing.

In variant embodiments, which are not illustrated: the outer periphery may be alternatively shaped, including circular; the outer periphery may have alternative sizes, including greater or smaller than the example range.

In variant embodiments, which are not illustrated, the data portion alternatively encodes the value of said parameter, including as alphanumeric symbols or other arrangement.

Referring to figure 10, with reference to the code of figure 9, a code processing process, which is executed by the electrical circuitry **16** (or the code processing circuitry thereof) for extraction of the preparation information includes:
**Step 1** - Identify locations of units of code
**Block 100:** obtain digital image of code **44** via the code reading system **118.**
**Block 102:** assign pixels to dark areas in digital image that could represent units **80.**
**Block 104:** if several units in proximity of each other then determine a unit **80** as present.
**Block 106:** for each determined unit determine a centre of pixel grouping by a rule, e.g. feature extraction, to determine a coordinate of a centre of the unit.

Invariant embodiments, which are not illustrated, alternative processing techniques for determining units and there coordinates may be implemented, including other techniques for locating a centre of a unit or identifying a unit as present, e.g. a level of magnification may be implemented so that a single pixel is determined as a unit, and a centre of a unit may be determined as the centre of a pixel.

### Step 2 - Locate Reference portion and read angles of code

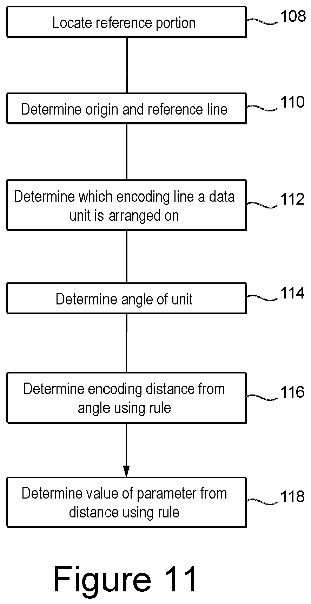

Referring to figure 11, with reference to the code of figure 9, processing of the code **44** includes:
**Block 108:** locate reference portion **R** by searching coordinates of units **80** of code **44** to identify the unique separation and geometric arrangement of reference units **84.** This may be implemented by geometric rules including Pythagoras and trigonometry or other suitable rule. Said separation and geometric arrangement can be stored on the electrical circuitry **16** and accessed during searching.

**Block 110:** for the located reference portion **R,** define the origin **O** and the position of reference line **r** using a stored relationship. The arrangement of the origin and reference line can be stored on the electrical circuitry **16** and mapped onto the coordinates of the located reference portion.

**Block 112:** for each unit (other than the units of the reference portion) determine based on distance from the origin **O** which encoding line **E** the units belong to. The electrical circuitry **16** can store a radii range for each encoding line **E** and using geometric rules determine the distance of each unit from the origin **O** and which radii range it falls in.

**Block 114:** for each unit (other than the units of the reference portion) determine the angle **α1, α2** with respect to the reference line **r.** It is to be noted that the angle is representative of the circumferential distance, and either could be used interchangeably. The angle can be calculated via know geometric relations between the coordinates of the reference line **r** and a virtual line extending from the origin **O** and through the associated unit.

**Step 3** - Determine values of parameters of preparation information.

Referring to figure 11, with reference to the code of figure 9 processing of the code **44** includes:
**Block 116:** the encoding distance **d** is determined for each individual data portion. This is achieved by implementing a set of rules for determining the encoding distance d which are stored by the electrical circuitry **16.** This can include the one or more of: the number of individual data portions on each encoding line; the start positions **88** of the individual data portions; if a single unit or multiple units represent a data unit **86,** and; other suitable relationships.

For example referring to figure 9, the rules for determining the encoding distances **d** of encoding line **E1** include that there are: two individual data portions; the start position **88** of the first individual data portion is at the intersection between the reference line **r** and the encoding line **E1;** the start position **88** of the second individual data portion is at the data unit **86** of the first individual data portion; the data unit **86** is of the first individual data portion is represented as a single unit of the code **44;** the data unit **86** is of the second individual data portion is represented as a two units of the code **44.**

For example referring to figure 9, the rules for determining the encoding distance **d** of encoding line **E2** include that there is: a single individual data portion; the start position **88** is at the intersection between the reference line **r** and the encoding line **E2;** the data unit **86** is of the first individual data portion is represented as a single unit of the code **44.**

**Block 118:** the encoding distances **d** for each data portion are converted into a value of a parameter. This is achieved by implementing a set of rules for converting the distance of a value which are stored by the electrical circuitry **16.**

For example, for encoding line **E1:** the first individual data portion may encode a water volume of a brewing process wherein the distance **d** is any continuous value which is linearly related to the water volume, and; the second individual data portion may encode a time of a brewing process wherein the encoding distance **d** is any continuous value which is exponentially related to the time.

For example, for encoding line **E2:** the single individual data portion may encode a water temperature of a brewing process wherein the encoding distance **d** is a discrete value which incrementally changes by 5 degrees C for each discrete position **90,** and the rule specifies which 5 degree increment is closest to the determined encoding distance **d.**

In variant embodiments, which are not illustrated, other rules can be implemented, including: other mathematical functions relating the encoding distance to the value of the parameter, and; if an encoding distance is the average of the distance several individual data portions, and other suitable relationships.

### [First example of Code reading system]

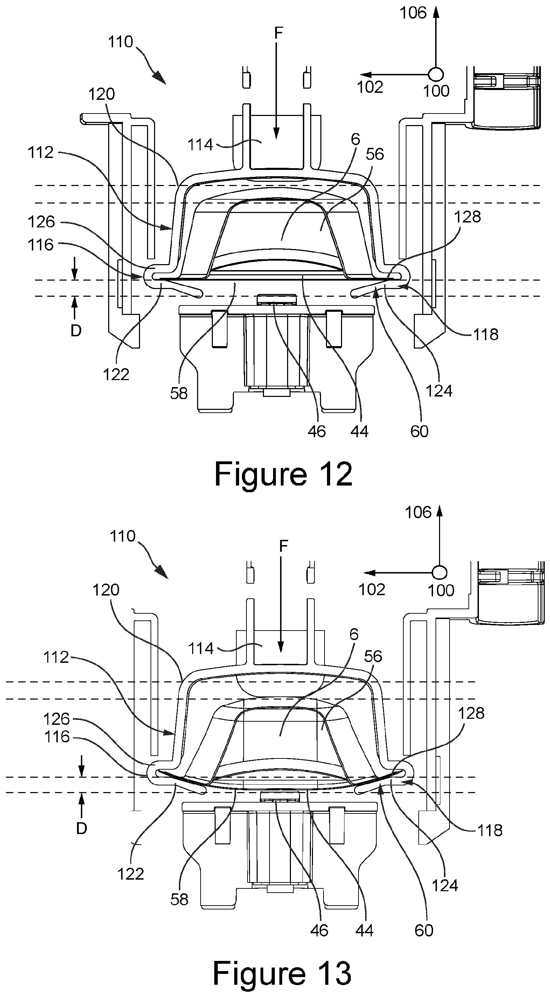

Referring to figures 12 to 14, a first example of the system **2** includes the container **6** and the code reading system **18.** The container **6** is as discussed in association with the embodiment of figure 7, and includes the code **44** arranged as multiple repetitions over a central portion (not illustrated) of the closing member **56.** The central portion includes a geometric centre which is bisected by the axis of rotation **108,** and extends to a peripheral region defined by a radii of less than 10% or 20% or 30% of the total radii of the closing member **56.**

Whilst the code **44** is described as being arranged as repetitions over the central portion, this arrangement can include the formation of the code **44** on just the central region or as repetitions over the entire closing member. Formed over the entire closing member can include formed on the central region and the peripheral region (the peripheral region is defined as a region that includes the periphery of the closing member and is adjacent the central region). Forming the code over the entire closing member is advantageous since sheet material forming the closing member can have the code printed over the entire sheet and portions that form the closing member can be cut from anywhere in the sheet, as opposed to requiring a specific alignment of the central portion and periphery. Hence container manufacturing is simplified.

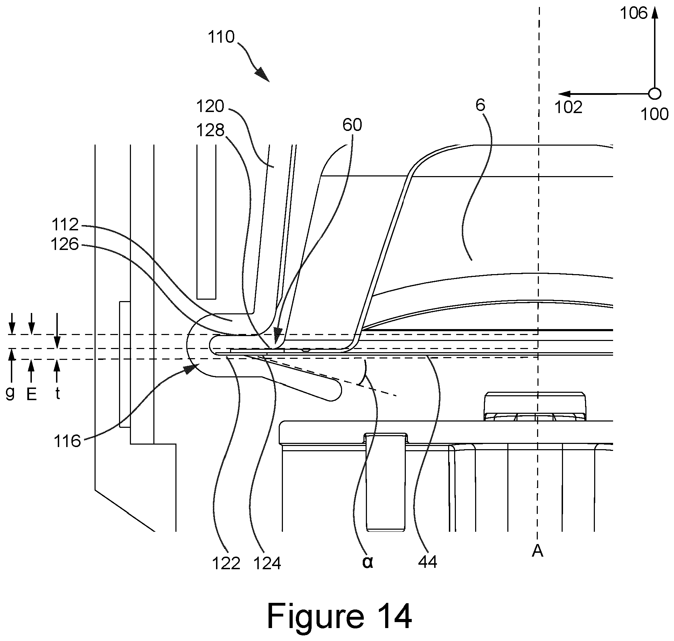

The code reading system **18** of the machine **4** includes a positioning mechanism **110,** which is arranged to position the container **6** in a holding position (as shown in figures 12 and 14) and a reading position (as shown in figure 13).

In the holding position (figure 12) the container **6** is separated from the code reader **46** by a distance D that extends in the depth direction **106.** In the holding position it may not be possible to accurately read the code, either based on the configuration of the image capturing unit (e.g. the due to a lens of the camera system being inoperable to focus over such a distance) or due to the arrangement of the container (e.g. the exterior surface of the closing member comprising the code **44** may be non-uniform such that the code **44** cannot be located). The central region that comprises repetitions of the code **44** is aligned in the longitudinal direction **100** and lateral direction **102** to the code reader **46,** such that to enable reading only the depth distance **D** needs to be closed when transitioning from the holding position to the code reading position

In the reading position, the code **44** of the container 6 is readable by the code reader **46.** In the first example, the container **6** in the reading position is arranged in a deformed configuration by a particular loading condition of three point bending as will be discussed.

The positioning mechanism **110** is arranged to apply a mechanical force to deform the container **6** from an undeformed configuration (in the holding position) to a deformed configuration (in the reading position). In the first example, parts of the storage portion **56,** closing member **58** and flange portion **60** are all deformed, hence the entire container may be considered to be deformed.

In particular: the central region of the closing member **56** is displaced in the counter depth direction (e.g. relative a suitable reference, which may be relative to its prior position and/or a peripheral edge of the flange portion or other generally stationary point on the container or machine etc) by the distance **D** such that the central region experiences less curvature than the peripheral region of the closing member; the flange portion **60** is curved at the left and right sides (as will be discussed), and; the storage portion **58** is compressed in the depth direction and curves proximal the left and right side of the flange portion **60.**

It will be understood that in the deformed configuration the positioning mechanism **110** applies a specific loading to the body portion **62** of the container **6** (specifically to both the flange portion **60** and storage portion **56**) so that through these portions subsequent deformation of the closing member **58** member is achieved so that it presents a comparatively more uniform surface for reading the code **44.**

In variant embodiments, which are not illustrated: the container is otherwise deformed in the reading position, e.g. by a purely compressive force without three point bending to push a base of the storage portion into or towards the closing member; the container is otherwise configured, e.g. without a flange portion and the closing member is directly attached to the storage portion, and; the code is arranged elsewhere other than the central region.

By implementing the central region of the closing member **56** to be displaced distance **D,** the code reader **46,** in the holding position can be located away from, rather than directly above, an inlet (not illustrated in figure 12 and 14) to the processing unit **14.** In this way vapour from the processing unit **14** condensing on the code reader maybe minimised, which may otherwise interfere with the code reading process.

Referring to figures 12 - 14, the positioning mechanism **110** includes a guide portion **112** that supports the container **6** at the flange portion **60** and a pressing element **114,** which applies a pressing force **F** in the counter depth direction **106** to a base of the storage portion **56** of the container **6** to implement the condition of three point bending in the lateral direction **102** over the container **6.**

The guide portion **112** includes a left side **116** and a right side **118,** which are interconnected by an interconnecting portion **120** that extends laterally around the storage portion **58.** The guide portion **112** extends in the longitudinal direction **100** as a channel to slideably convey the container **6** to the processing unit **14** (not illustrated in figures 12 - 14).

In the deformed position, a left side and a right side of the flange portion **60** are supported by the respective left side **116** and right side **118** of the guide portion **112,** substantially in the depth direction **106** (as will be discussed), and slideably in the lateral direction **102,** such that the support can be idealised as a sliding support.

The pressing element **114** is translatable in the counter depth direction **100** through an aperture in the interconnecting portion **120,** to apply said pressing force **F.**

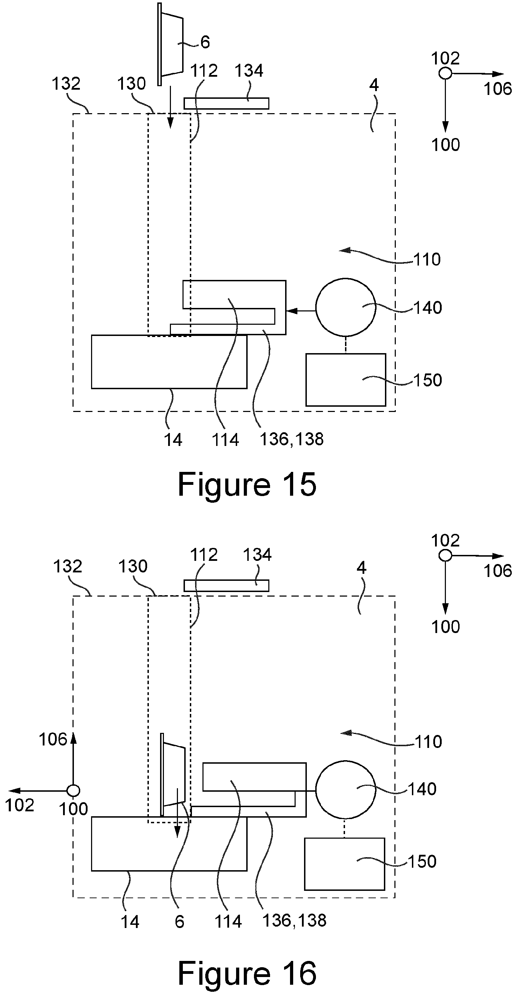

Referring to figures 15 and 16, the pressing element **114** is driven in the depth direction **106** by a drive unit **140** of the positioning system **110,** which comprises an electrical motor and drive assembly arranged as a linear actuator. A detection system **150** of the positioning system **110** provides feedback to the electrical circuitry **16** of the position and force applied by the pressing element **114** (and therefore the container **6** being arranged in the holding position or the reading position) as will be discussed.

In variant embodiments, which are not illustrated, the drive system is alternatively implemented including as: a solenoid, and; other linear actuator such as a hydraulic system.

Referring to figures 12 - 14, the left side **116** and right side **118** of the guide portion **112** have a front surface **122** that engages a front surface **124** of the flange portion **60.** The front surface **122** is shaped to correspond to the shape of the container **6** in the deformed configuration (as shown in figure 13). In particular, the front surface **122** is angled with increasing distance in the counter depth direction **106** from the periphery of the flange portion **60** towards the centre of the container **6.** Referring to figure 14, the angle ∝ is 10 - 30 degrees to the lateral direction **102.** In this way, a particular shape in the deformed configuration can be encouraged and better supported. Moreover, the support condition can account for a proportion of the distance **D** over which the closing member **58** of the container **6** is displaced, hence increasing the possible distance of displacement.

In variant embodiments, which are not illustrated, the front surface is alternatively profiled including: curved, and; aligned to the lateral direction.

The left side **116** and right side **118** of the guide portion **112** have a rear surface **126** that engages a rear surface **128** of the flange portion **60** (the engagement is not shown in the figures). The rear surface **126** is shaped to correspond to the shape of the container **6** in the undeformed configuration (as shown in figure 14). In this way if the container returns to the undeformed configuration it can slide to the processing unit **14** via guiding from the rear surface **126** and/or the front surface **124.**

In variant embodiments, which are not illustrated: the guide portion is alternatively implemented including: without an interconnection portion; laterally arranged such that it has a conveyor mechanism to transfer the container rather than by gravity, and; the guide portion can also be omitted for examples of container that do not include a flange portion.

Referring to figure 14, the front surface **122** and rear surface **126** of the guide portion **112** are separated by a distance **E** in the depth direction **106,** which is defined as the minimum distance in the depth direction **106** between the front surface **122** and the rear surface **126.** Since the front surface **122** is angled in the counter depth direction towards the centre of the container **6,** the distance **E** is arranged at the periphery of the flange portion **60** of the container **6.** Distance **E** is greater than the corresponding thickness **t** of the flange portion **60.** In the example, **E >** 1.5**t**, and in a particular example **E** = **t** + 1 to 2 mm.

In this way the container **6** in the undeformed configuration (or deformed configuration) can slide within the guide portion **112** to the processing unit **14** uninhibited.

Moreover, when transitioning from the holding position (figures 12 and 14) to the reading position (figure 13) the container **6** can be translated (in addition to the distance achieved by deformation) by distance g, where **g** = **E - t.** The translation is along reading axis **A,** which is normal to and through a reading direction of the reading head of the code reader **46.**

It is to be noted that in figures 12 and 14 the container **6** is shown arranged with the front face **124** of the flange portion **60** abutting the front surface **122** of the guide portion. Hence in this example, with such an arrangement the translation distance **g** would be minimal. However, the container **6** may also be arranged (not illustrated) with the rear face **128** of the flange portion **60** abutting the rear surface **126** of the guide portion **112.** Hence the container **6** would be translated the full distance **g** shown in figure 14. Other arrangements (not illustrated) of the container in the guide portion in the holding position are also possible, e.g. the container may be angled between the two abovementioned positions, in which case distance **g** may be between the two amounts. It will be understood that the particular position of the container in the holding position will be deterred by how it falls though the guide portion.

It will be understood that for the first example of the code reading system **18,** the positioning mechanism **110** is arranged to translate along the axis **A** the container **6** relative the code reader **46** from a holding position, in which the container **6** is separated from a reading head of the code reader **46** and the code **44** is aligned along said axis **A** with the code reader **46,** to a reading position, in which the code **44** of the container **6** is in contact with the reading head.

In this way the container **6** can be kept away from the code reader **46** when sliding through the guide portion **112,** which could otherwise cause sticking of the container **6** in the guide portion **112** or after multiple repetitions, damage a reading window (not illustrated) of the code reader **46.** Moreover the distance between the code reader **46** and container **6** can be closed to improve reading.

The angled surface **122** also contributes to an amount that the container **6** in effect translates, however this is in combination with deformation of the container **6** as discussed previously.

In variant embodiments, which are not illustrated, the distance **E** is set to **t** so that the container can slide through the guide portion without depth translation. With such an arrangement it will be understood that the container is deformed and not translated when transferred from the holding position to the reading position.

In the reading position (figure 14) the central region of the closing member **58** of the container **6** is arranged in physical contact with the code reader **46.** The closing member **58** is flexible and deforms around a reading head of the code reader **46.** The reading head of the code reader **46,** which is in direct abutment with the closing member **58,** is shaped to correspond to the shape of the closing member **58** with the container **6** in the deformed configuration. In this example, since the central region in the deformed configuration experiences less curvature than the peripheral region and/or the central region when undeformed (typically due to wrinkling) a generally flat shape of the reading head is implemented.

The code reader **46** can be positioned to displace the closing member in the deformed configuration, in the depth direction **106.** In this manner there is a pressing force applied to the closing member by the code reader. Alternatively, the code reader **46** can be positioned just to abut the surface of the closing member without displacing it.

In the deformed configuration the central region of the closing member **58** is displaced in a counter depth direction **106** relative the plane of the flange portion **60** prior to its deformation by 2 - 6 mm when the container is subject to a three point bending in a lateral direction. The three point bending comprises: a sliding support of the container **6** at the left and right edges of the flange portion **60** as discussed herein; a force applied centrally between said left and right edges of the container **6** in the counter depth direction at a base of the storage portion of 15 - 120 N.

The various capsules, including those as defined previously by variable depth and/or a concave/convex/planar closing member, may all deform by 4 mm in said counter depth direction of the closing member, when subjected to 15 - 120 N.

As can be observed when comparing figures 12 and 13, the three point bending reduces an internal volume of the storage portion in the deformed configuration compared to the deformed configuration. In this way, since the container **6** is hermitically sealed, an internal pressure acting on the closing member **58** increased, which may provide a more unform surface for reading. Moreover, since in the deformed configuration the depth of the container **6** is reduced, for containers **6** which are sufficiently full, the precursor material can be displaced into the closing member **58.** This may also provide a more unform surface for reading.

Referring to figure 15, the container **6** is inserted into the machine **24** via an inlet **130** through a housing **132** of the machine **2.** The inlet **130** is opened and closed by a user actuated closing member **134** that is actuated between open (as illustrated) and closed (not illustrated) positions. The container **6** is inserted directly into the guide portion **112,** which transfers the container **6** in the longitudinal direction **100** via gravity acting on its own mass to the holding position (figure 12).

The positioning mechanism **110** includes a transfer mechanism **136,** which comprises a holding member **138** and the drive unit **140.** The holding member **138** is arrangeable in a closed position (as shown in figure 15) to retain the container in the holding position (rather than enabling it to proceed via the guide portion **112** to the processing unit **114**), prior to its transfer to the reading position (as shown in figure 12). In the closed position, at least part of the guide portion **112** is unblocked by the holding member **138** to prevent said transmission.

A user subsequently inputs via the user interface/input unit **50** an instruction to read the code/prepare a beverage/foodstuff from the container **6** (as discussed at **block 72** in figure 8) and the positioning mechanism **110** based on said instruction transfers the container **6** to the reading position (figure 13), in which the code **44** is read. The holding member **138** is integrated with the pressing element **114** such that it moves with the pressing element **114** and is maintained in the closed position to prevent the container **6** from transferring via the guide portion **112** to the processing unit **114.**

Subsequent to successful reading of the code **44** the positioning mechanism **110** then automatically returns the container **6** to the holding position (figure 12). The holding member **138** is moved to a transfer position (figure 16) to enable the container to proceed via the guide portion **112** to the processing unit **114.** In the transfer position, sufficient an amount of the guide portion **112** is open and unblocked by the holding member **138** to permit said transmission.

In variant embodiments, which are not illustrated, the closing member may be actuated by a dedicated drive unit or may be omitted; the transfer mechanism may have a dedicated drive unit, so that it is moved independently of the pressing element.

### [Second example of Code reading system]

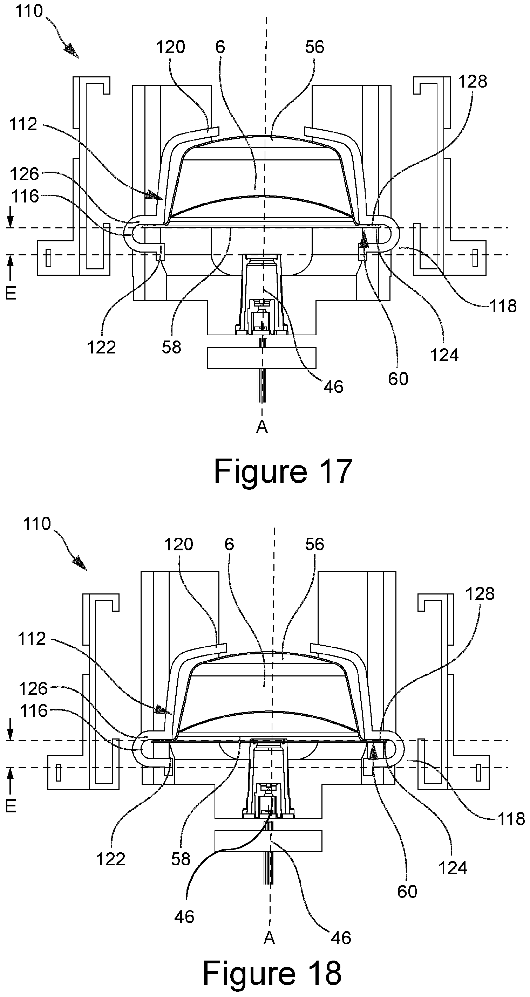

Referring to figures 17 and 18, a second example of the system **2** implements the code reading system **18** of the first example but with a positioning mechanism **110** to implement a different reading position (shown in figure 18). Where not discussed, for brevity, the features and variants of the second example are as for the first example.

In the second example, the positioning mechanism **110** is arranged to translate along the reading axis **A** (in the counter depth direction **106**) the container **6** and code reader **46** relative to each other from: a holding position (shown in figure 17), in which the container **6** is separated from the reading head of the code reader **46** and the code **44** is aligned along said axis **A** with the code reader **46,** to; a reading position (shown in figure 18), in which the code **44** of the container **6** is in contact with the reading head of the code reader **46.**

In the reading position, the body portion **62** of the container **6** is generally undeformed (particularly when compared to the first example), however the closing member **58** is deformed and is in contact with the code reader **46** as will be discussed.

The guide portion **112** is arranged with a front surface **122** and rear surface **126** parallel to the lateral direction **102.** The front surface **122** and rear surface **126** are separated by a distance **E** in the depth direction **106.** Distance **E** is greater than the corresponding thickness **t** of the flange portion **60.** In the example, **E** > 1.5**t**, and in a particular example **E** = **t** + 1 - 5 mm.

Since the storage portion **56** and the flange portion **60** of the container **6** are not substantially deformed in the reading position, the pressing element of the first example can be omitted.

In the second example the guide portion **112** remains stationary relative the machine **2** and the code reader **46** is translated along the axis **A** to press into the closing member **58.** In the reading position (figure 18) the code reader **46** presses the rear surface **128** of the flange portion **60** of the container **6** into the rear surface **126** of the guide portion **112.**

The closing member **58** is flexible and is arranged to deform to correspond in shape to a reading head of the code reader **46** in the reading position. The code **44** is arranged on the central region of the closing member **58.** The central region of the closing member is arranged to displace by 2 - 6 mm when subject to a pressing force of 15 - 120 N by the code reader **46.**

In variant embodiments, which are not illustrated: the second example is alternatively configured with the code reader to remain stationary and the guide portion to be translated to carry the container to the code reader, or; a pressing element may be implemented as for the first example to translate the container within a stationary guide portion to the a stationary code reader.

### [Detection system]

Referring to figures 15 and 16, the first or second examples of the code reading system **18** (including the discussed variant embodiments that are associated therewith) include a detection system **150** to detect a reading position figures 13 and 18) if a predetermined condition for reading the code **44** is met, and if said condition is met, then the electrical circuitry **16** configured to process the code **44** to extract the preparation information in the reading position.

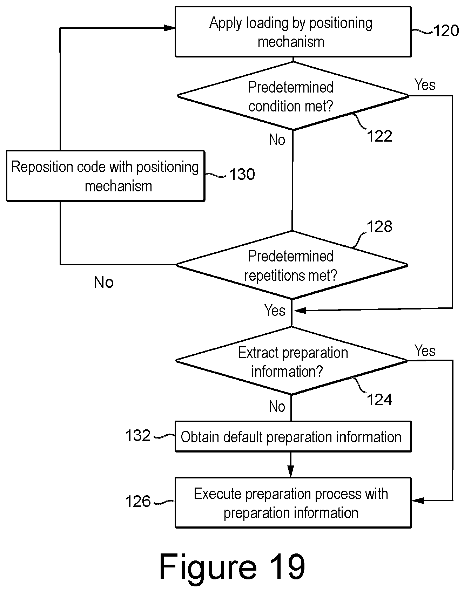

Referring to figure 19 a process of determining if the predetermined condition for reading the code **44** is met comprises:
**Block 120:** implementing the positioning mechanism **110** to move the container **6** from the holding position (figures 12, 14 and 17) to a loading position. The loading position may be designated as from the point of initiation of application (or substantial application) of a loading condition by the positioning mechanism **110** to the container **6** to effect its deformation and/or translation for the purpose of reading the code **44.**

In the loaded position, the positioning mechanism **110** applies a load increasing phase of a load cycle (examples of which will be discussed) to the container **6,** which may comprise the application of a force and/or a displacement to the container **6.** Typically, the force is ramped up to a constant value or is ramped up, and a variable displacement is applied.

**Block 122:** the electrical circuitry **16** uses an input (e.g. as a signal or digital information) from the detection system **150** to determine a reading position (figures 13 and 18) if a predetermined condition for reading the code **44** is met (as will be discussed). At the point of the predetermined condition being met a positive determination under **Block 122** is triggered, and **Block 124** is executed.

**Block 124:** the preparation information is read from the code (as previously discussed in association with figures 10 and 11). At **Block 124,** the electrical circuitry **16** is configured to maintain the load condition as the same (including substantially the same) as when the predetermined condition was met at block **122** so that the code is read under said load condition.

**Block 126:** if the preparation information is successfully read at **Block 124,** then the preparation process is executed with control of the preparation unit **14** based on the extracted preparation information.

In the event that a complete load increasing phase of the load cycle is applied (e.g. such that the maximum load/displacement that the positioning mechanism **110** is capable of is applied) and the predetermined condition for reading the code is not met then a negative determination under **Block 122** is triggered with **Blocks 128** and **Blocks 130** subsequently executed.

**Block 128:** if it is determined that a predetermined number (e.g. 2 or 3) of repetitions of **Blocks 120** and **122** have already been executed (e.g. the container **6** has been repositioned multiple times and still the predetermined condition is not met), then **Block 124** is executed and the preparation information is attempted to be extracted, else **Blocks 120, 122** and **130** are repeated.

**Block 130:** if the predetermined condition is not determined as being met, then the electrical circuitry **16** is configured to control the positioning mechanism **110** initiate repositioning of the container **6** by transition the container 6 to the holding position. This is initiated by applying a load decreasing phase of the load cycle. **Blocks 120** and **122** are then subsequently repeated.

**Block 132:** if the preparation information is not successful extracted at **Block 122,** then default preparation information is obtained from an electronic memory (not illustrated) of the system **2.** And at **Block 124** a preparation process is executed with control of the preparation unit **14** based on the default preparation information.

In variant embodiments, which are not illustrated: at **Block 130** as an alternative to transitioning the container to the holding position, remaining in the loading position the load of the load increasing phase may be partially reduced and then increased again at **Block 120;** if at **Block 124** the preparation information cannot be extracted, then an error message may be returned to the user via the user interface; **Block 128** may be omitted such that the container **6** is not repositioned if a predetermined condition is not determined, and; at **Block 124** if the code **44** can not be read then the **Blocks 128** and **130** can be executed in the same manner as was discussed for **Block 122.** In examples of the position mechanism that do not apply a variable load to the container (e.g. a fixed container reading position is set) then it will be understood that **Block 122** may be omitted.

**Block 122** includes sub Block 122A and block 122B (not illustrated) which are a first condition, and; a different second condition, wherein both first and second conditions are required to be met as the predetermined condition of **Block 120** (hence AND logic).

In variant embodiments, which are not illustrated: there are other numbers of conditions, e.g. only a first condition or an additional third condition etc., and; other logic may be implemented between the conditions e.g. OR such than only one of the conditions requires triggering.

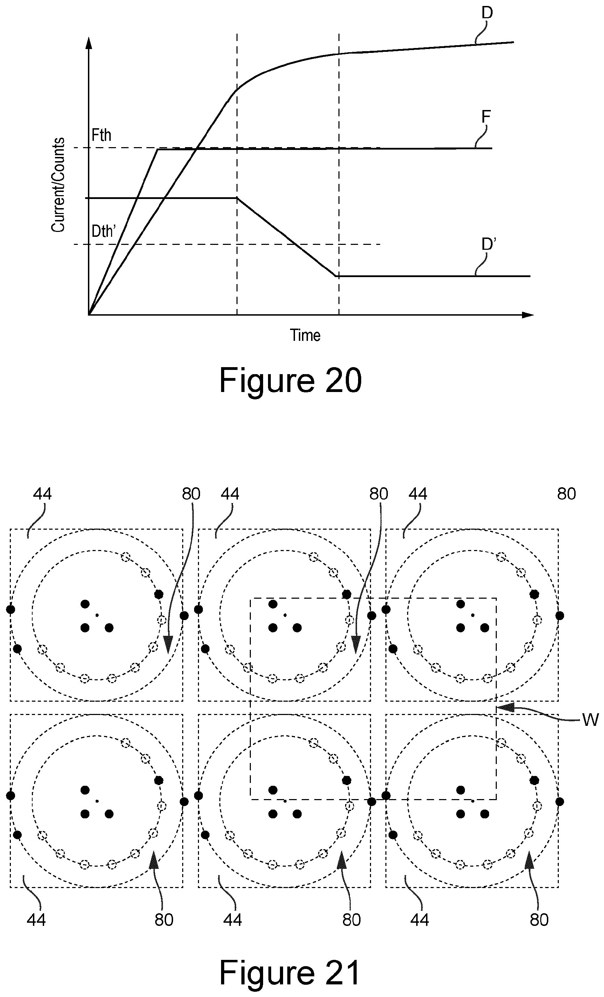

Referring to figure 20 a loading phase of a load cycle is shown for a container in a loading position. In the example the displacement and force are initially applied to a container with a linear profile, which varies when subject to increased resistance from the container. The load may be increased with various loading profiles, including linear, curved or stepped or combinations thereof.

The first condition is based on the force **F** applied to the container by the positioning mechanism being maintained at a target force, i.e. at or below a threshold force **Fth.** The force **F** is measured by electrical current applied to the electrical motor of the drive unit **140**, which is representative of the applied force.

In variant embodiments, which are not illustrated; the force is alternatively measured e.g. via a load cell; there is no target force and just a threshold force which if exceeded then the predetermined condition is met, and; another electrical quantity (including a derivative thereof) of the drive unit/the associated circuit may be used instead of current that is representative of force such as power (although it is to be understood that since the power is based on current a measure of power is also based on current).

A smoothing system (not illustrated) to reduce fluctuations in the force is implemented. By implementing a smoothing system (e.g. as signal processing or via electrical componentry such as a resistor and capacitor) unrepresentative fluctuations in the force may prevent the force thresholds from being erroneously triggered or may permit easier maintenance of the target force. The smoothing system may also be implemented for the second condition.

The second condition is based on a displacement **D** applied to the container by the positioning mechanism **110** crossing a threshold. In particular, it is based on a first order time derivative **D'** of the displacement applied to the container reducing from an amount to below a threshold **Dth.**

By considering the rate change of displacement reducing below a threshold, it can be determined when there is relatively little further displacement under a given force, i.e. the container has stopped displacing.

The displacement **D** is based encoder counts produced from an encoder connected to the drive unit **140**, hence the number of encoder counts in a given time gives a first order derivative of the displacement.

In variant embodiments, which are not illustrated; the displacement is alternatively measured e.g. via a displacement sensor; the displacement rather than a first order time derivative thereof is used for the second condition, e.g. the number of counts crossing a threshold may be used; other order derivatives of displacement may also be used.

By implementing both displacement and force criterion, a range of container geometries and flexibilities can be arranged in a deformed configuration/reading position suitable for reading the code:
For containers that are relatively thin in the depth direction are not particularly stiff, the rate change of the displacement provides an accurate estimate of when the container is sufficiently deformed, whereas the electrical current target prevents excessive force being applied, which could otherwise cause compaction of be precursor material rendering not processable.

For containers that are relatively thicker, they may experience a relatively linear displacement rate, compared to the thinner container, such that it can only be determined that there is sufficient displacement once the rate change of displacement begins to decrease below the threshold, and the electrical current target prevents excessive force being applied at any point.

The thresholds can be calibrated based on experimental data, i.e. testing of a range of force and displacement conditions that suitable code reads were provided at.

In variant embodiments, the predetermined condition is based on a digital image of the code as will be discussed or other variables.

It the above example, the loading condition is variable since the first order derivative of displacement threshold (rather than a displacement threshold) is considered when the container is subject to a constant force (the maintaining of the force below or at the threshold force). Consequently, for containers with different depth body portions a different overall displacement is automatically applied, however the first order derivative of displacement threshold can be maintained as the same amount. Hence the loading condition is automatically adapted to different container geometries.

Moreover, for stiffer containers due to different materials and/or different thickness, in a similar manner a different overall displacement is applied, however the first order derivative of displacement threshold can be maintained as the same amount.

In variant embodiments: a fixed displacement and/or force may be applied; a fixed displacement and variable force may be applied; the loading condition can be otherwise adapted.

The processes of figure 19 and 20 can be integrated with the overall process for preparing a beverage shown in figure 8, as part of an alternative **block 74** (in which the code reading system **18** is separate from the processing unit **14)** that alternatively comprises operation of the positioning mechanism **110** to transfer the container from the holding position to the reading position. In variant embodiments, code reading system (including the detection system) is alternatively implemented as part of the processing unit, as for the embodiments discussed in association with figures 4 and 5 such that closing and opening of the processing unit also moves the container from the holding position to the reading position.

### [Condition based on Digital image of code]

Referring to figures 21 - 23, the code reading system **118** includes a code reader to obtain a digital image of the code **44,** and the code reading system **118** includes electrical circuitry **16** to determine from the digital image of the code if the container is in a reading position based on a predetermined condition, and if said condition is met, then the electrical circuitry configured to process the code to extract the preparation information in the reading position.

The predetermined condition being based on the digital image of the code **44** can be integrated in the previous process as the predetermined condition at **Block 122** discussed in association with figure 19 or as part of an alternative implementation that does not include a positioning mechanism **118.** It will therefore be understood that the disclosure associated with the detection system in reference to figure 19 is incorporated in this example, which for brevity is not reiterated.

Referring to figure 21, the predetermined condition in an example is based on a geometric property of the code:
In a first example the property is determined based on a diameter of one or more of the units **80** of one or more of the codes **44** of the image being greater than a predetermined amount. Such and example can test if the code **44** is within a suitable distance range of the code reader for reading.

In a second example, the property is determined based on a number of units **80** forming the code **44** arranged within a predetermined sized window W being greater than a predetermined amount. Such an example can test if the code **44** is within a suitable distance range of the code reader for reading.

In a third example (which is not illustrated), the geometric property is based a geometric pattern of the code, e.g. that of the finder portion of the code and a particular angle/distance between reference units of the finder portion, which are at fixed positions with respect to each other. Such an example can test the integrity of the code **44** e.g. if it is distorted due to creases or other discontinuities in the closing member on which it is arranged.

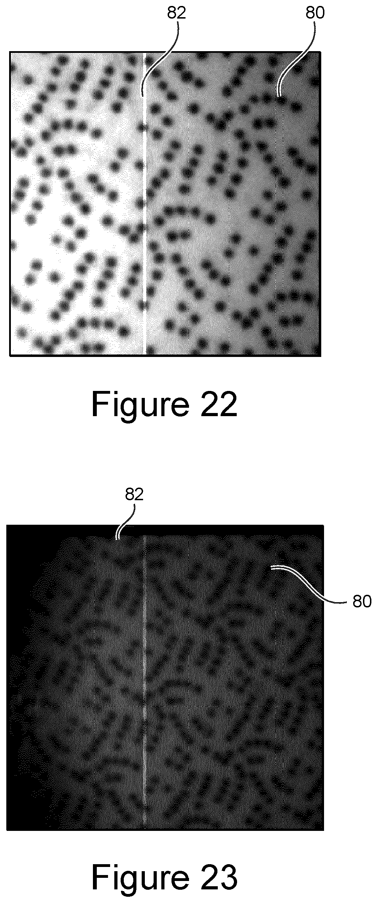

Referring to figures 22 and 23, the predetermined condition in a further example is alternatively based on an optical property of the code:
Figure 22 illustrates the code **44** arranged contiguous (i.e. touching or in close proximity) to the code reader. It can be observed that the surround **82** is white and the code units **80** are clearly distinguishable as black.
Figure 23 illustrates the code **44** arranged too far away from the code reader **46** for suitable reading. It can be observed that the surround **82** is partially white and back in some areas and the code units **80** are not clearly distinguishable.

Accordingly the code **44** being arranged in a suitable position can be determined by one of more of the following: a mean grey scale crossing a threshold; a proportion of a particular amount of grey scale crossing a threshold; a mean luminance, and; other related feature.

It will be appreciated that any of the disclosed methods (or corresponding apparatuses, programs, data carriers, etc.) may be carried out by either a host or client, depending on the specific implementation (i.e. the disclosed methods/apparatuses are a form of communication(s), and as such, may be carried out from either 'point of view', i.e. in corresponding to each other fashion). Furthermore, it will be understood that the terms "receiving" and "transmitting" encompass "inputting" and "outputting" and are not limited to an RF context of transmitting and receiving radio waves. Therefore, for example, a chip or other device or component for realizing embodiments could generate data for output to another chip, device or component, or have as an input data from another chip, device or component, and such an output or input could be referred to as "transmit" and "receive" including gerund forms, that is, "transmitting" and "receiving", as well as such "transmitting" and "receiving" within an RF context.

In the claims, any reference signs placed between parentheses shall not be construed as limiting the claim. The word 'comprising' does not exclude the presence of other elements or steps then those listed in a claim. Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

As used herein, any machine executable instructions, or compute readable media, may carry out a disclosed method, and may therefore be used synonymously with the term method, or each other.

The foregoing description of one or more implementations provides illustration and description, but is not intended to be exhaustive or to **limit** the scope of the invention to the precise form disclosed.

### LIST OF REFERENCES

**2** System
   **4** Machine
      **14** Processing unit
         **20** Container processing unit (first example)
            **32** Extraction unit
            **34** Capsule holding portion
            **36** Closing portion
            **38** Injection head
            **40** Beverage outlet
         **22** Fluid conditioning system
            **24** Reservoir
            **26** Pump
            **28** Heat exchanger
            **30** Outlet
      **16** Electrical circuitry
         **48** Control electrical circuitry
         **50** Input unit
         **52** Processor
         **54** Feedback system
      **18** Code reading system
         **46** Image capturing unit
      **130** Inlet
      **132** Housing
      **134** Closing member
      **136** Transfer mechanism
         **138** Transfer member
      **110** Positioning mechanism
         **112** Guide portion
         **116** Left side
         **118** Right side
         **122** Front surface
         **126** Rear surface
      **120** Interconnecting portion
      **114** Pressing element
      **140** Drive unit
      **150** Detection system
**6** Container
   **56** Closing member
      **44** Code
         **80** Units
         **R** Reference portion
            **84** Reference units
            **r** Reference line
            **O** Origin
         **D** Data portion
            **86** Data units
            **E** Encoding line
               **d** Distance
               **88** Start position
               **90** Discrete positions
         I Code Identifying portion
            **94** Discrete position
            **96** Identifying units
      **82** Surround
         **92** Outer periphery
   **62** Body portion
      **58** Storage portion
      **60** Flange portion
         **124** Front surface
         **128** Rear surface
**8** Server system
**10** Peripheral device
**12** Computer network

## Claims

1. A system (2) comprising a container (6) and a machine (4) for preparing a beverage and/or foodstuff,
the container (6) including:
a body portion (62) with a storage portion (58) for containing a precursor material;
a closing member (56) to close the storage portion (58);
a machine-readable optical code (44) storing preparation information, said code (44) arranged on the closing member (56),
the machine (4) including:
a code reading system (18) to read the optical code (44) of the container (6);
a processing unit (14) for processing the precursor material of the container (6), and;
electrical circuitry (16) to control the processing unit (14) based on the preparation information read from the code (44),
wherein the code reading system (18) includes a code reader (46), and
wherein the code reading system (18) includes a positioning mechanism (110) to translate along an axis the container (6) and code reader (46) relative to each other from a holding position, in which the container (6) is separated from a reading head of the code reader (46) and the code (44) is aligned along said axis with the code reader (46), to a reading position, in which the code (44) of the container (6) is in contact with the reading head,
**characterized in that** the positioning mechanism (110) is adapted to deform the body portion (62) of the container (6) from an undeformed configuration to a deformed configuration, in which the code (44) is readable by the code reader (46), wherein in the deformed configuration the closing member (56) is arranged to physically contact the code reader (46), and
wherein in the reading position the closing member (56) presents a comparatively more uniform surface for reading of the code (44) compared to the holding position wherein the closing member (56) has a more even spatial arrangement to the undeformed configuration.

2. The system (2) of claim 1, wherein the machine (4) includes a guide portion (112), which is arranged to guide the container (6) inserted into the guide portion (112) via gravity from an inserted position to the holding position and to the processing unit (14).

3. The system (2) of claim 2, wherein the processing unit (14) includes a container holding portion (34) and a closing portion (36) which are movable between a container receiving position and a container processing position in a depth direction, wherein the closing portion (36) includes a cavity that extends from the closing member (56) in said depth direction.

4. The system (2) of either of claims 2 or 3, wherein the reading head is arranged relative the guide portion (112) to enable a container (6) to travel through the guide portion (112) to the holding position and/or from the holding position to the processing unit (14) without touching the reading head.

5. The system (2) of any preceding claim, wherein the positioning mechanism (110) is configured to translate the container (6) with the code reader (46) stationary from the holding position to the reading position.

6. The system (2) of claims 4, when dependent on either of claims 2 or 3, wherein the container (6) is translated via a pressing force applied to a base of the storage portion (58) of the container (6) via a pressing element (114), which is independently actuatable from the guide portion (112).

7. The system (2) of either of claims 5 or 6, wherein the body portion (62) comprises a flange portion (60) that interconnects the storage portion (58) and the closing member (56) of the container (6), and the guide portion (112) of the machine (4) is arranged to guide the flange portion (60),
wherein the guide portion (112) comprises a front face engaging portion to engage a front face (124) of the flange (60) and a rear face engaging portion to engage a rear face (128) of the flange (60),
the front face engaging portion and rear face engaging portion separated by a gap greater than a thickness of the flange (60), such that:
the container (6) can pass through the guide portion (112) from the inserted position to the holding position and into the processing unit (14) and;
translate from the holding position to the reading position.

8. The system (2) of any preceding claim, wherein the positioning mechanism (110) includes a holding member (138), which is arrangeable in a closed position to retain the container (6) in the holding position and is arrangeable in a transfer position to enable transfer of the capsule to the processing unit (14).

9. The system (2) of any preceding claim comprising a plurality of containers (6) with a storage portion (58) of different depth, the positioning mechanism (110) configured to transfer said containers (6) from the holding position to the reading position and to read the code (44) of each container (6).

10. The system (2) of any preceding claim, wherein in the reading position the code reader (46) is pressed into the closing member (56),
and the closing member (56) is arranged as a flexible membrane and is arranged to deform to correspond in shape to a reading head of the code reader (46) in the reading position, wherein the code (44) is arranged on a central region of the closing member (56) and the central region of the closing member (56) is arranged to displace by 2 - 6 mm when subject to a pressing force of 15 - 120 N by the reading head.

11. A machine (4) for preparing a beverage and/or foodstuff, the machine (4) comprising:
a code reading system (18) to read an optical code (44) of a container (6), said container (6) including a body portion (62) with a storage portion (52) for containing a precursor material and a closing member (56) to close the storage portion (52); said optical code being a machine-readable optical code (44) storing preparation information and being arranged on said closing member (56); the machine further comprising:
a processing unit (14) for processing precursor material of the container (6), and; electrical circuitry (16) to control the processing unit (14) based on preparation information read from the code (44),
wherein the code reading system (18) includes a code reader (46), and a positioning mechanism (110) to translate along an axis the container (6) and code reader (46) relative to each other from a holding position, in which the container (6) is separated from a reading head of the code reader (46) and the code (44) is aligned along said axis with the code reader (46), to a reading position, in which the code (44) of the container (6) is in contact with the reading head,
said machine being
**characterized in that** the positioning mechanism (110) is adapted to deform the body portion (62) of the container (6) from an undeformed configuration to a deformed configuration, in which the code (44) is readable by the code reader (46), wherein in the deformed configuration the closing member (56) is arranged to physically contact the code reader (46), and
wherein in the reading position the closing member (56) presents a comparatively more uniform surface for reading of the code (44) compared to the holding position wherein the closing member (56) has a more even spatial arrangement to the undeformed configuration.

## Patentansprüche

1. System (2), umfassend einen Behälter (6) und eine Maschine (4) zum Zubereiten eines Getränks und/oder Nahrungsmittels,
wobei der Behälter (6) einschließt:
einen Körperabschnitt (62) mit einem Lagerabschnitt (58) zum Aufnehmen eines Ausgangsmaterials;
ein Verschlusselement (56), um den Lagerabschnitt (58) zu verschließen;
einen maschinenlesbaren optischen Code (44), der Zubereitungsinformationen speichert, wobei der Code (44) auf dem Verschlusselement (56) angeordnet ist,
wobei die Maschine (4) einschließt:
ein Codelesesystem (18), um den optischen Code (44) des Behälters (6) zu lesen;
eine Verarbeitungseinheit (14) zum Verarbeiten des Ausgangsmaterials des Behälters (6) und;
elektrische Schaltlogik (16), um die Verarbeitungseinheit (14) basierend auf den Zubereitungsinformationen zu steuern, die aus dem Code (44) gelesen werden,
wobei das Codelesesystem (18) einen Codeleser (46) einschließt und
wobei das Codelesesystem (18) einen Positionierungsmechanismus (110) einschließt, um den Behälter (6) und den Codeleser (46) entlang einer Achse relativ zueinander von einer Halteposition, in der der Behälter (6) von einem Lesekopf des Codelesers (46) getrennt ist und der Code (44) entlang der Achse mit dem Codeleser (46) ausgerichtet ist, zu einer Leseposition zu verschieben, in der der Code (44) des Behälters (6) in Berührung mit dem Lesekopf steht,
**dadurch gekennzeichnet, dass** der Positionierungsmechanismus (110) angepasst ist, um den Körperabschnitt (62) des Behälters (6) von einer unverformten Konfiguration zu einer verformten Konfiguration zu verformen, in der der Code (44) durch den Codeleser (46) lesbar ist, wobei in der verformten Konfiguration das Verschlusselement (56) angeordnet ist, um den Codeleser (46) physisch zu berühren, und
wobei in der Leseposition das Verschlusselement (56) eine vergleichsweise gleichmäßigere Oberfläche zum Lesen des Codes (44) verglichen mit der Halteposition aufweist, wobei das Verschlusselement (56) eine gleichmäßigere räumliche Anordnung zu der unverformten Konfiguration aufweist.

2. System (2) nach Anspruch 1, wobei die Maschine (4) einen Führungsabschnitt (112) einschließt, der angeordnet ist, um den Behälter (6), der in den Führungsabschnitt (112) eingesetzt ist, mittels Schwerkraft von einer eingesetzten Position zu der Halteposition und zu der Verarbeitungseinheit (14) zu führen.

3. System (2) nach Anspruch 2, wobei die Verarbeitungseinheit (14) einen Behälterhalteabschnitt (34) und einen Verschlussabschnitt (36) umfasst, die zwischen einer Behälteraufnahmeposition und einer Behälterverarbeitungsposition in einer Tiefenrichtung bewegbar sind, wobei der Verschlussabschnitt (36) einen Hohlraum einschließt, der sich von dem Verschlusselement (56) in der Tiefenrichtung erstreckt.

4. System (2) nach einem der Ansprüche 2 oder 3, wobei der Lesekopf relativ zu dem Führungsabschnitt (112) angeordnet ist, um einem Behälter (6) zu ermöglichen, durch den Führungsabschnitt (112) zu der Halteposition und/oder von der Halteposition zu der Verarbeitungseinheit (14) zu gelangen, ohne den Lesekopf zu kontaktieren.

5. System (2) nach einem der vorstehenden Ansprüche, wobei der Positionierungsmechanismus (110) konfiguriert ist, um den Behälter (6) bei stationärem Codeleser (46) von der Halteposition in die Leseposition zu verschieben.

6. System (2) nach den Ansprüchen 4, wenn abhängig von einem der Ansprüche 2 oder 3, wobei der Behälter (6) über eine Druckkraft bewegt wird, die auf eine Basis des Lagerabschnitts (58) des Behälters (6) über ein Druckelement (114) aufgebracht wird, das unabhängig von dem Führungsabschnitt (112) betätigt werden kann.

7. System (2) nach einem der Ansprüche 5 oder 6, wobei der Körperabschnitt (62) einen Flanschabschnitt (60) umfasst, der den Lagerabschnitt (58) und das Verschlusselement (56) des Behälters (6) miteinander verbindet, und der Führungsabschnitt (112) der Maschine (4) angeordnet ist, um den Flanschabschnitt (60) zu führen,
wobei der Führungsabschnitt (112) einen Stirnflächeneingriffabschnitt, um eine Stirnfläche (124) des Flansches (60) in Eingriff zu nehmen, und einen Rückflächeneingriffabschnitt umfasst, um eine Rückfläche (128) des Flansches (60) in Eingriff zu nehmen,
der Stirnflächeneingriffabschnittund der Rückflächeneingriffabschnitt durch einen Spalt getrennt sind, der größer als eine Dicke des Flansches (60) ist, derart, dass:
der Behälter (6) durch den Führungsabschnitt (112) von der eingesetzten Position zu der Halteposition und in die Verarbeitungseinheit (14) hindurchtreten kann und;
von der Halteposition in die Leseposition verschoben wird.

8. System (2) nach einem der vorstehenden Ansprüche, wobei der Positionierungsmechanismus (110) ein Halteelement (138) einschließt, das in einer geschlossenen Position angeordnet werden kann, um den Behälter (6) in der Halteposition zu halten, und in einer Übertragungsposition angeordnet werden kann, um eine Übertragung der Kapsel zu der Verarbeitungseinheit (14) zu ermöglichen.

9. System (2) nach einem der vorstehenden Ansprüche, umfassend eine Vielzahl von Behältern (6) mit einem Lagerabschnitt (58) unterschiedlicher Tiefe, wobei der Positionierungsmechanismus (110) konfiguriert ist, um die Behälter (6) von der Halteposition in die Leseposition zu übertragen und den Code (44) jedes Behälters (6) zu lesen.

10. System (2) nach einem der vorstehenden Ansprüche, wobei in der Leseposition der Codeleser (46) in das Verschlusselement (56) hineingedrückt ist,
und das Verschlusselement (56) als eine flexible Membran angeordnet ist und angeordnet ist, um sich zu verformen, um in der Leseposition der Form eines Lesekopfs des Codelesers (46) zu entsprechen, wobei der Code (44) auf einem zentralen Bereich des Verschlusselements (56) angeordnet ist und der zentrale Bereich des Verschlusselements (56) angeordnet ist, um sich um 2-6 mm zu verrücken, wenn einer Druckkraft von 15-120 N durch den Lesekopf ausgesetzt.

11. Maschine (4) zum Zubereiten eines Getränks und/oder Nahrungsmittels, die Maschine (4) umfassend:
ein Codelesesystem (18) zum Lesen eines optischen Codes (44) eines Behälters (6), wobei der Behälter (6) einen Körperabschnitt (62) mit einem Lagerabschnitt (52) zum Enthalten eines Ausgangsmaterials und ein Verschlusselement (56) einschließt, um den Lagerabschnitt (52) zu verschließen; wobei der optische Code ein maschinenlesbarer optischer Code (44) ist, der Zubereitungsinformationen speichert und an dem Verschlusselement (56) angeordnet ist; die Maschine ferner umfassend:
eine Verarbeitungseinheit (14) zum Verarbeiten des Vorläufermaterials des Behälters (6) und;
elektrische Schaltlogik (16), um die Verarbeitungseinheit (14) basierend auf Zubereitungsinformationen zu steuern, die aus dem Code (44) gelesen werden,
wobei das Codelesesystem (18) einen Codeleser (46) und einen Positionierungsmechanismus (110) umfasst, um den Behälter (6) und den Codeleser (46) entlang einer Achse relativ zueinander von einer Halteposition, in der der Behälter (6) von einem Lesekopf des Codelesers (46) getrennt ist und der Code (44) entlang der Achse mit dem Codeleser (46) ausgerichtet ist, zu einer Leseposition zu verschieben, in der der Code (44) des Behälters (6) in Berührung mit dem Lesekopf steht, wobei die Maschine **dadurch gekennzeichnet ist, dass** der Positionierungsmechanismus (110) angepasst ist, um den Körperabschnitt (62) des Behälters (6) von einer unverformten Konfiguration zu einer verformten Konfiguration zu verformen, in der der Code (44) durch den Codeleser (46) lesbar ist, wobei in der verformten Konfiguration das Verschlusselement (56) angeordnet ist, um den Codeleser (46) physisch zu berühren, und
wobei in der Leseposition das Verschlusselement (56) eine vergleichsweise gleichmäßigere Oberfläche zum Lesen des Codes (44) verglichen mit der Halteposition aufweist, wobei das Verschlusselement (56) eine gleichmäßigere räumliche Anordnung zu der unverformten Konfiguration aufweist.

## Revendications

1. Système (2) comprenant un récipient (6) et une machine (4) permettant de préparer une boisson et/ou une denrée alimentaire,
le récipient (6) comportant :
une partie de corps (62) avec une partie de stockage (58) permettant de contenir un matériau précurseur ;
un élément de fermeture (56) pour fermer la partie de stockage (58) ;
un code optique lisible par machine (44) stockant des informations de préparation, ledit code (44) étant disposé sur l'élément de fermeture (56),
la machine (4) comportant :
un système de lecture de code (18) pour lire le code optique (44) du récipient (6) ;
une unité de traitement (14) permettant de traiter le matériau précurseur du récipient (6), et ;
un ensemble de circuits électriques (16) pour commander l'unité de traitement (14) sur la base des informations de préparation lues à partir du code (44),
dans lequel le système de lecture de code (18) comporte un lecteur de code (46), et
dans lequel le système de lecture de code (18) comporte un mécanisme de positionnement (110) pour déplacer le long d'un axe le récipient (6) et le lecteur de code (46) l'un par rapport à l'autre, d'une position de maintien, dans laquelle le récipient (6) est séparé d'une tête de lecture du lecteur de code (46) et le code (44) est aligné le long dudit axe avec le lecteur de code (46), à une position de lecture, dans laquelle le code (44) du récipient (6) est en contact avec la tête de lecture,
**caractérisé en ce que** le mécanisme de positionnement (110) est adapté pour déformer la partie de corps (62) du récipient (6) d'une configuration non déformée à une configuration déformée, dans laquelle le code (44) est lisible par le lecteur de code (46), dans laquelle, dans la configuration déformée, l'élément de fermeture (56) est disposé pour entrer physiquement en contact avec le lecteur de code (46), et
dans lequel, dans la position de lecture, l'élément de fermeture (56) présente une surface comparativement plus uniforme pour la lecture du code (44) par rapport à la position de maintien dans laquelle l'élément de fermeture (56) a une disposition spatiale plus régulière par rapport à la configuration non déformée.

2. Système (2) selon la revendication 1, dans lequel la machine (4) comporte une partie de guidage (112), qui est disposée pour guider le récipient (6) inséré dans la partie de guidage (112) par gravité, d'une position insérée à la position de maintien et vers l'unité de traitement (14).

3. Système (2) selon la revendication 2, dans lequel l'unité de traitement (14) comporte une partie de maintien de récipient (34) et une partie de fermeture (36) qui sont mobiles entre une position de réception de récipient et une position de traitement de récipient dans une direction de profondeur, dans lequel la partie de fermeture (36) comporte une cavité qui s'étend à partir de l'élément de fermeture (56) dans ladite direction de profondeur.

4. Système (2) selon l'une ou l'autre des revendications 2 ou 3, dans lequel la tête de lecture est disposée par rapport à la partie de guidage (112) pour permettre à un récipient (6) de traverser la partie de guidage (112) jusqu'à la position de maintien et/ou de la position de maintien à l'unité de traitement (14) sans toucher la tête de lecture.

5. Système (2) selon l'une quelconque revendication précédente, dans lequel le mécanisme de positionnement (110) est configuré pour faire passer le récipient (6) avec le lecteur de code (46) immobile de la position de maintien à la position de lecture.

6. Système (2) selon les revendications 4, lorsqu'elles dépendent de l'une ou l'autre des revendications 2 ou 3, dans lequel le récipient (6) est déplacé par une force de pression appliquée à une base de la partie de stockage (58) du récipient (6) par l'intermédiaire d'un élément de pression (114), qui est actionnable indépendamment de la partie de guidage (112).

7. Système (2) selon l'une ou l'autre des revendications 5 ou 6, dans lequel la partie de corps (62) comprend une partie de bride (60) qui relie la partie de stockage (58) et l'élément de fermeture (56) du récipient (6), et la partie de guidage (112) de la machine (4) est conçue pour guider la partie de bride (60),
dans lequel la partie de guidage (112) comprend une partie de mise en prise de face avant pour venir en prise avec une face avant (124) de la bride (60) et une partie de mise en prise de face arrière pour venir en prise avec une face arrière (128) de la bride (60),
la partie de mise en prise de face avant et la partie de mise en prise de face arrière étant séparées par un espace supérieur à une épaisseur de la bride (60), de telle sorte que :
le récipient (6) peut traverser la partie de guidage (112) de la position insérée à la position de maintien et dans l'unité de traitement (14) et ;
faire passer de la position de maintien à la position de lecture.

8. Système (2) selon l'une quelconque revendication précédente, dans lequel le mécanisme de positionnement (110) comporte un élément de maintien (138), qui peut être disposé dans une position fermée pour retenir le récipient (6) dans la position de maintien et qui peut être disposé dans une position de transfert pour permettre le transfert de la capsule vers l'unité de traitement (14).

9. Système (2) selon l'une quelconque revendication précédente, comprenant une pluralité de récipients (6) avec une partie de stockage (58) de profondeur différente, le mécanisme de positionnement (110) étant configuré pour transférer lesdits récipients (6) de la position de maintien à la position de lecture et pour lire le code (44) de chaque récipient (6).

10. Système (2) selon l'une quelconque revendication précédente, dans lequel, dans la position de lecture, le lecteur de code (46) est enfoncé dans l'élément de fermeture (56),
et l'élément de fermeture (56) est disposé comme une membrane flexible et est conçu pour se déformer afin de correspondre à la forme d'une tête de lecture du lecteur de code (46) dans la position de lecture, dans lequel le code (44) est disposé sur une région centrale de l'élément de fermeture (56) et la région centrale de l'élément de fermeture (56) est conçue pour se déplacer de 2 à 6 mm lorsqu'elle est soumise à une force de pression de 15 à 120 N par la tête de lecture.

11. Machine (4) permettant de préparer une boisson et/ou une denrée alimentaire, la machine (4) comprenant :
un système de lecture de code (18) pour lire un code optique (44) d'un récipient (6), ledit récipient (6) comportant une partie de corps (62) avec une partie de stockage (52) permettant de contenir un matériau précurseur et un élément de fermeture (56) pour fermer la partie de stockage (52) ; ledit code optique étant un code optique lisible par machine (44) stockant des informations de préparation et disposé sur ledit élément de fermeture (56) ; la machine comprenant en outre :
une unité de traitement (14) permettant de traiter le matériau précurseur du récipient (6), et ;
un ensemble de circuits électriques (16) pour commander l'unité de traitement (14) sur la base d'informations de préparation lues à partir du code (44),
dans lequel le système de lecture de code (18) comporte un lecteur de code (46), et un mécanisme de positionnement (110) pour déplacer le long d'un axe le récipient (6) et le lecteur de code (46) l'un par rapport à l'autre, d'une position de maintien, dans laquelle le récipient (6) est séparé d'une tête de lecture du lecteur de code (46) et le code (44) est aligné le long dudit axe avec le lecteur de code (46), à une position de lecture, dans laquelle le code (44) du récipient (6) est en contact avec la tête de lecture, ladite machine étant **caractérisée en ce que** le mécanisme de positionnement (110) est adapté pour déformer la partie de corps (62) du récipient (6) d'une configuration non déformée à une configuration déformée, dans laquelle le code (44) est lisible par le lecteur de code (46), dans lequel, dans la configuration déformée, l'élément de fermeture (56) est disposé pour entrer physiquement en contact avec le lecteur de code (46), et
dans lequel, dans la position de lecture, l'élément de fermeture (56) présente une surface comparativement plus uniforme pour la lecture du code (44) par rapport à la position de maintien dans laquelle l'élément de fermeture (56) a une disposition spatiale plus régulière par rapport à la configuration non déformée.
